(19) Europäisches Patentamt
European Patent Office
Office européen des brevets

(11) **EP 4 202 803 B1**

(12) **EUROPEAN PATENT SPECIFICATION**

(45) Date of publication and mention
of the grant of the patent:
**11.03.2026 Bulletin 2026/11**

(21) Application number: **21860896.6**

(22) Date of filing: **28.05.2021**

(51) International Patent Classification (IPC):
**G06N 3/096** $^{(2023.01)}$     **G06N 3/0495** $^{(2023.01)}$
**G06N 3/045** $^{(2023.01)}$     **G06N 3/09** $^{(2023.01)}$
**G06N 3/082** $^{(2023.01)}$

(52) Cooperative Patent Classification (CPC):
**G06N 3/045; G06N 3/0495; G06N 3/082;**
**G06N 3/09; G06N 3/096**

(86) International application number:
**PCT/JP2021/020527**

(87) International publication number:
**WO 2022/044465 (03.03.2022 Gazette 2022/09)**

(54) **INFORMATION PROCESSING METHOD AND INFORMATION PROCESSING SYSTEM**

INFORMATIONSVERARBEITUNGSVERFAHREN UND
INFORMATIONSVERARBEITUNGSSYSTEM

PROCÉDÉ DE TRAITEMENT D'INFORMATIONS ET SYSTÈME DE TRAITEMENT
D'INFORMATIONS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.08.2020 US 202063069266 P**
**03.03.2021 JP 2021033329**

(43) Date of publication of application:
**28.06.2023 Bulletin 2023/26**

(73) Proprietor: **Panasonic Intellectual Property**
**Corporation**
**of America**
**Torrance, CA 90504 (US)**

(72) Inventors:
• **NAKATA, Yohei**
**Chuo-ku, Osaka-shi, Osaka 540-6207 (JP)**
• **ISHII, Yasunori**
**Chuo-ku, Osaka-shi, Osaka 540-6207 (JP)**
• **OKUNO, Tomoyuki**
**Chuo-ku, Osaka-shi, Osaka 540-6207 (JP)**

(74) Representative: **Novagraaf International SA**
**Chemin de l'Echo 3**
**1213 Onex, Geneva (CH)**

(56) References cited:
**US-A1- 2019 122 100**

• YUAN LI ET AL: "Revisiting Knowledge
Distillation via Label Smoothing Regularization",
2020 IEEE/CVF CONFERENCE ON COMPUTER
VISION AND PATTERN RECOGNITION (CVPR),
IEEE, 13 June 2020 (2020-06-13), pages 3902 -
3910, XP033803570, DOI: 10.1109/
CVPR42600.2020.00396
• ANTONIO POLINO ET AL: "Model compression
via distillation and quantization", ARXIV.ORG,
CORNELL UNIVERSITY LIBRARY, 201 OLIN
LIBRARY CORNELL UNIVERSITY ITHACA, NY
14853, 15 February 2018 (2018-02-15),
XP081215688
• TIANQI CHEN ET AL: "Net2Net: accelerating
learning via knowledge transfer",
ARXIV:1511.05641V4, 23 April 2016 (2016-04-23),
XP055349756, Retrieved from the Internet
<URL:https://arxiv.org/abs/1511.05641v4>
[retrieved on 20170227]

**(Cont. next page)**

- **FUJITA, YUYA: "Implementation of deep learning in a distributed speech recognition system used for Web search, etc", JOURNAL OF DIGITAL PRACTICE, vol. 10, no. 2, 15 April 2019 (2019-04-15), JP
, pages 322 - 336, XP009542334, ISSN: 2188-4390**

- **IMAI, TAKEO: "The world of embedded artificial intelligence expanded with A1 compiler", INTERFACE, vol. 45, no. 1, 1 January 2019 (2019-01-01), JP
, pages 46 - 55, XP009542337, ISSN: 0387-9569**

**Description**

[Technical Field]

The present disclosure relates to an information processing method and so forth executed by a computer.

[Background Art]

Non patent literature (NPL) 1 proposes a method, relating to a neural network, of searching for a network architecture.

[Citation List]

[Non Patent Literature]

[NPL 1] Yu Liu, et al, (2020), "Search to Distill: Pearls are Everywhere but not the Eyes", Computer Vision and Pattern Recognition (CVPR)
Further art is disclosed by the article "Revisiting Knowledge Distillation via Label Smoothing Regularization" by YUAN LI ET AL, 2020 IEEE/CVF CONFERENCE ON COMPUTER VISION AND PATTERN RECOGNITION (CVPR), IEEE, 13 June 2020 (2020-06-13), pages 3902-3910, XP033803570. This document discloses an information processing method comprising obtaining a first inference model serving as a reference and computing a second inference model that is larger than the first inference model in model size, based on the first inference model.

[Summary of Invention]

[Technical Problem]

However, it is difficult for the method proposed in NPL 1 to find an inference model that is expected to reduce a loss caused by quantization.
In view of this, the present disclosure provides an information processing method and so forth capable of finding an inference model that is expected to reduce a loss caused by quantization.

[Solution to Problem]

The information processing method according to an aspect of the present disclosure is an information processing method executed by a computer. This information processing method includes: obtaining a first inference model serving as a reference; computing a second inference model that is larger than the first inference model in model size, based on the first inference model; quantizing the second inference model computed to generate a third inference model; training the third inference model, using machine learning; determining whether a performance of the third inference model trained satisfies a condition; and outputting the third inference model trained, when the performance satisfies the condition, the third inference model is an integrated environment network and is assumed to be integrated into an IoT device, and in the quantizing of the second inference model, a representation form is changed to a representation form that requires a smaller number of bits.
These general and specific aspects may be implemented using a system, a device, a method, an integrated circuit, a computer program, or a non-transitory computer-readable recording medium such as a CD-ROM, or any combination of systems, devices, methods, integrated circuits, computer programs, or recording media.

[Advantageous Effects of Invention]

The information processing method and so forth according to an aspect of the present disclosure enables to find an inference model that is expected to reduce a loss caused by quantization.

[Brief Description of Drawings]

[FIG. 1]

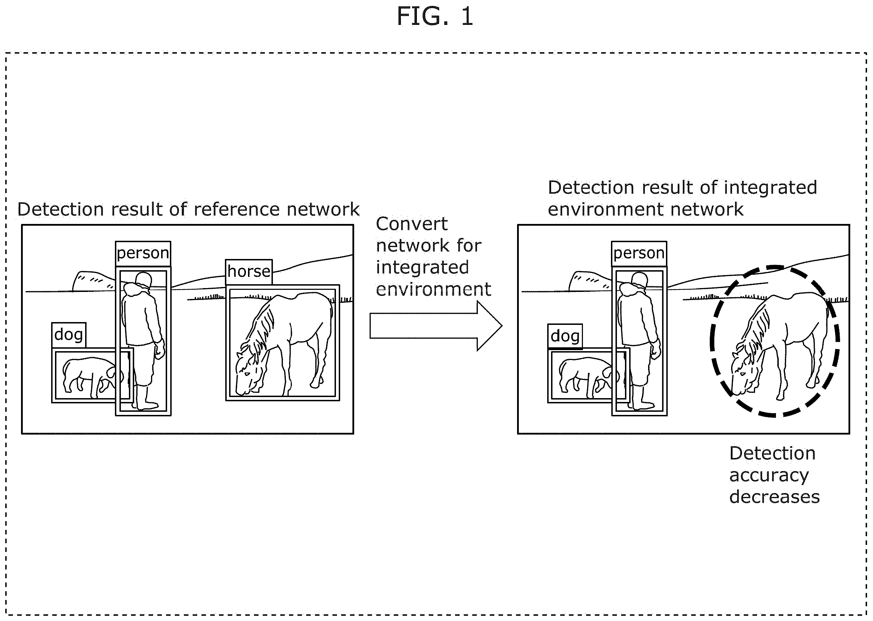

FIG. 1 is a conceptual diagram showing a decrease in detection accuracy in a first reference example.

[FIG. 2]

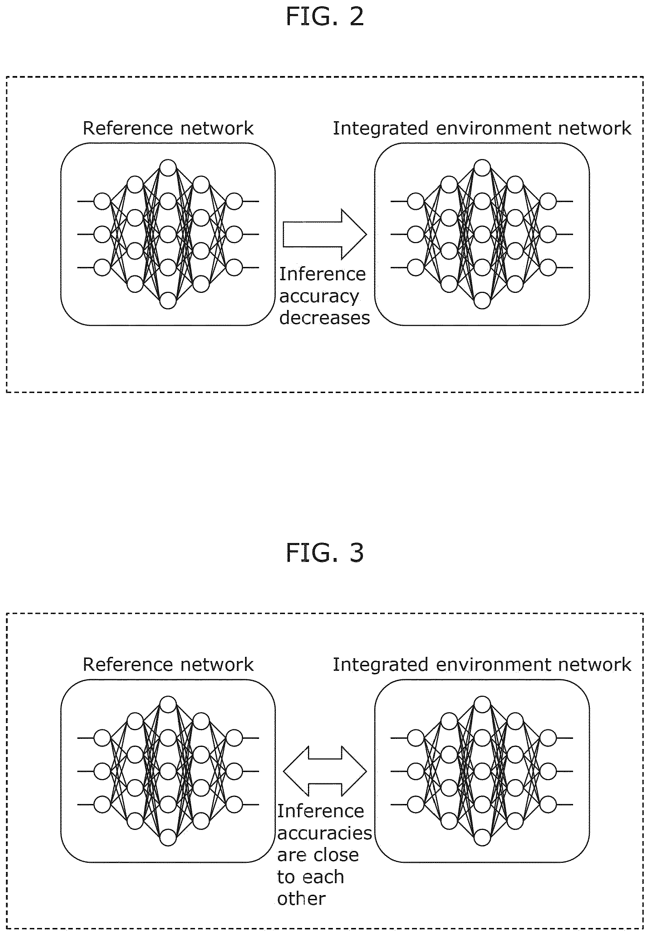

FIG. 2 is a conceptual diagram showing a comparison between a reference network and an integrated environment network in the first reference example.

[FIG. 3]

FIG. 3 is a conceptual diagram showing a comparison between a reference network and an integrated environment network in Embodiment 1.

[FIG. 4]

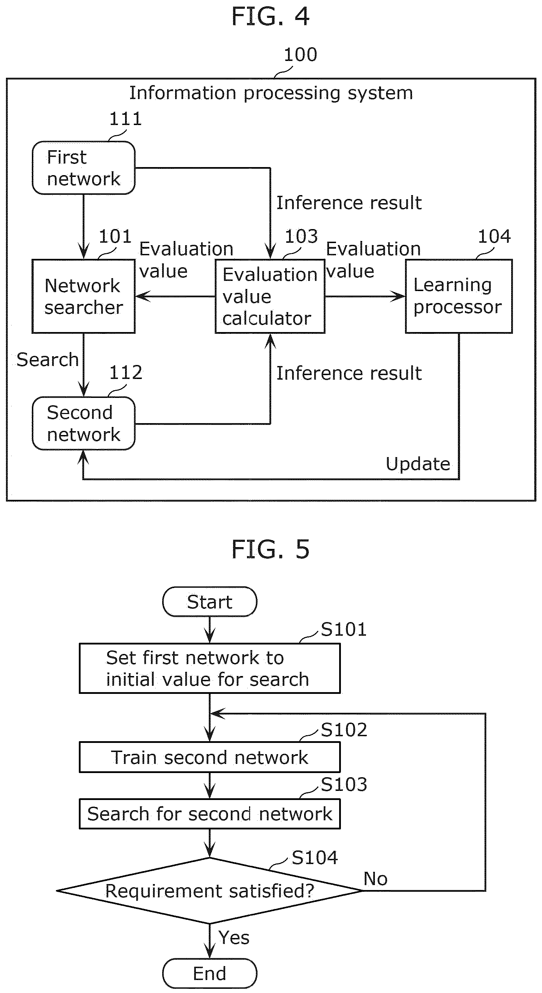

FIG. 4 is a block diagram showing the configuration of an information processing system in a second reference example.

[FIG. 5]

FIG. 5 is a flowchart of an operation performed by the information processing system in the second reference example.

[FIG. 6]

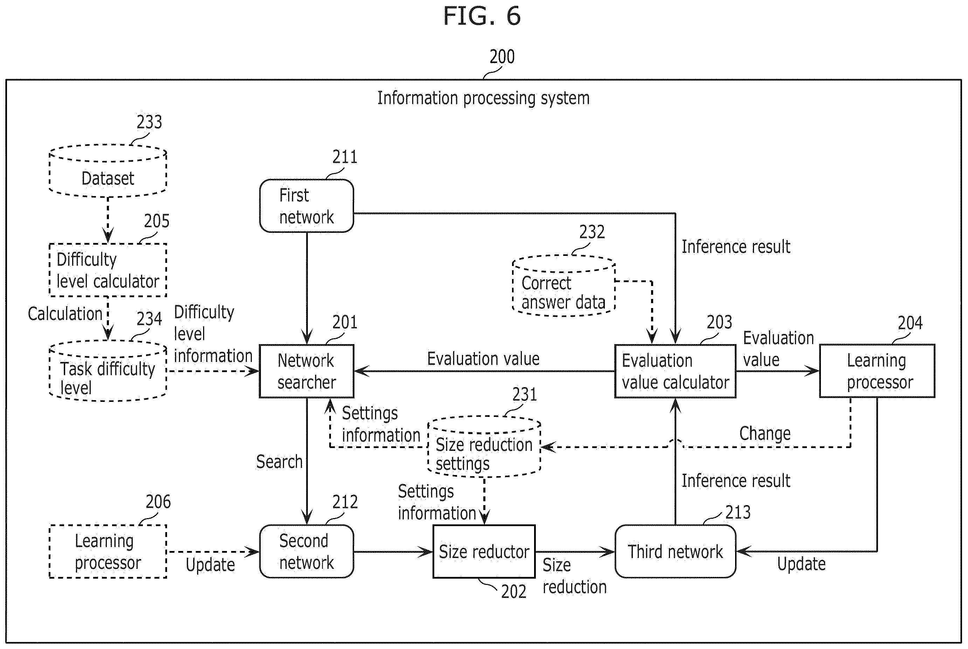

FIG. 6 is a block diagram showing an example of the configuration of an information processing system in Embodiment 1.

[FIG. 7]

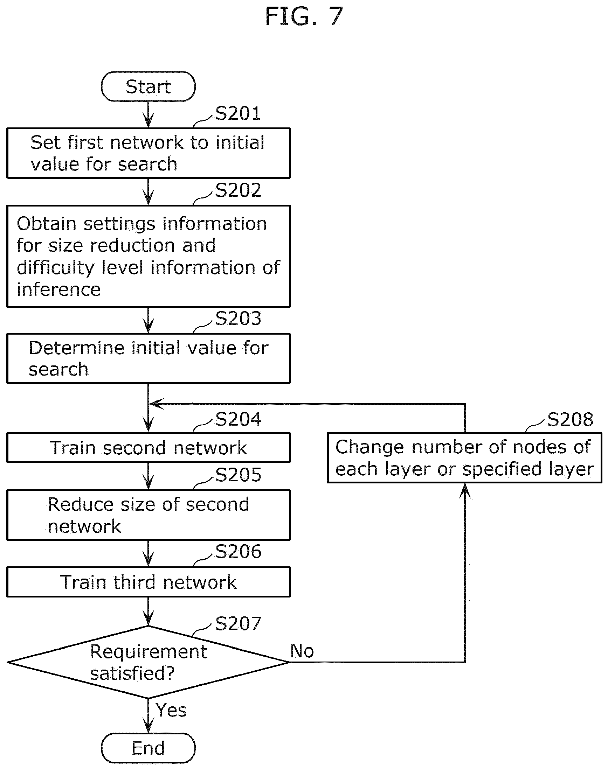

FIG. 7 is a flowchart of a first operation example performed by the information processing system in Embodiment 1.

[FIG. 8]

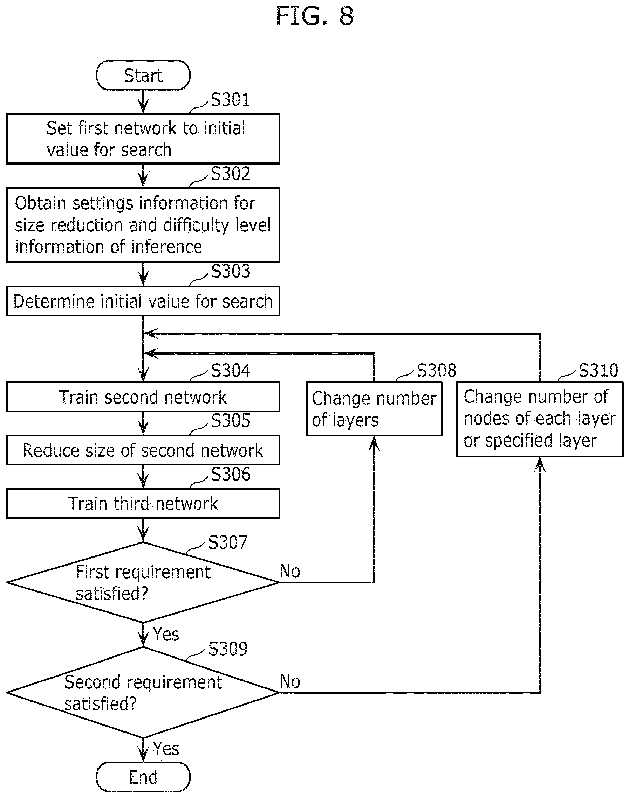

FIG. 8 is a flowchart of a second operation example performed by the information processing system in Embodiment 1.

[FIG. 9]

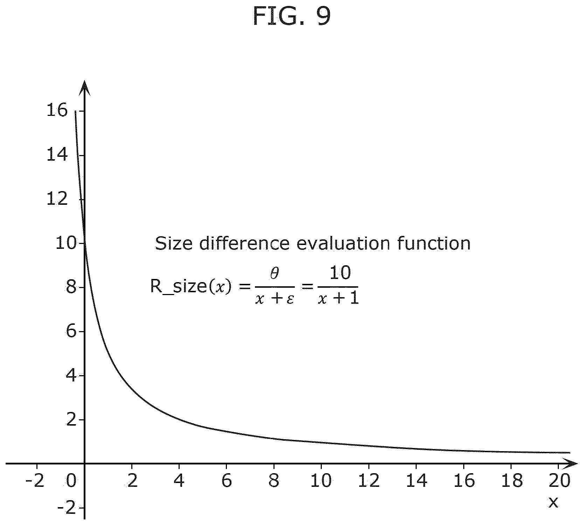

FIG. 9 is a graph showing a size difference evaluation function in Embodiment 2.

[FIG. 10]

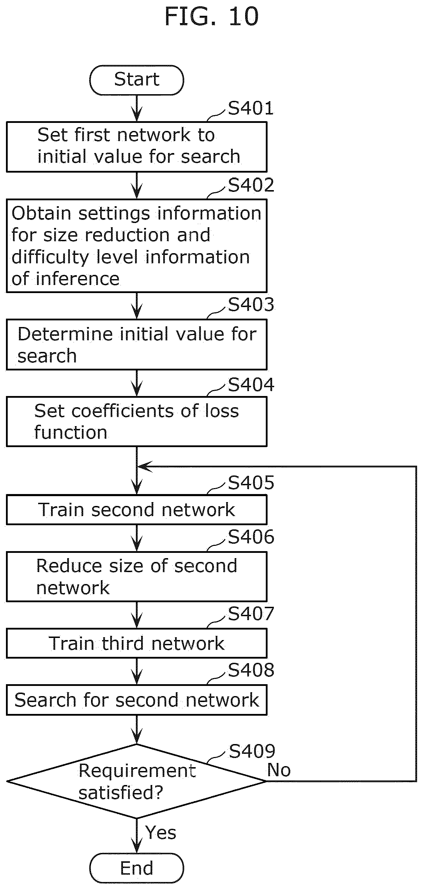

FIG. 10 is a flowchart of a first operation example performed by an information processing system in Embodiment 2.

[FIG. 11]

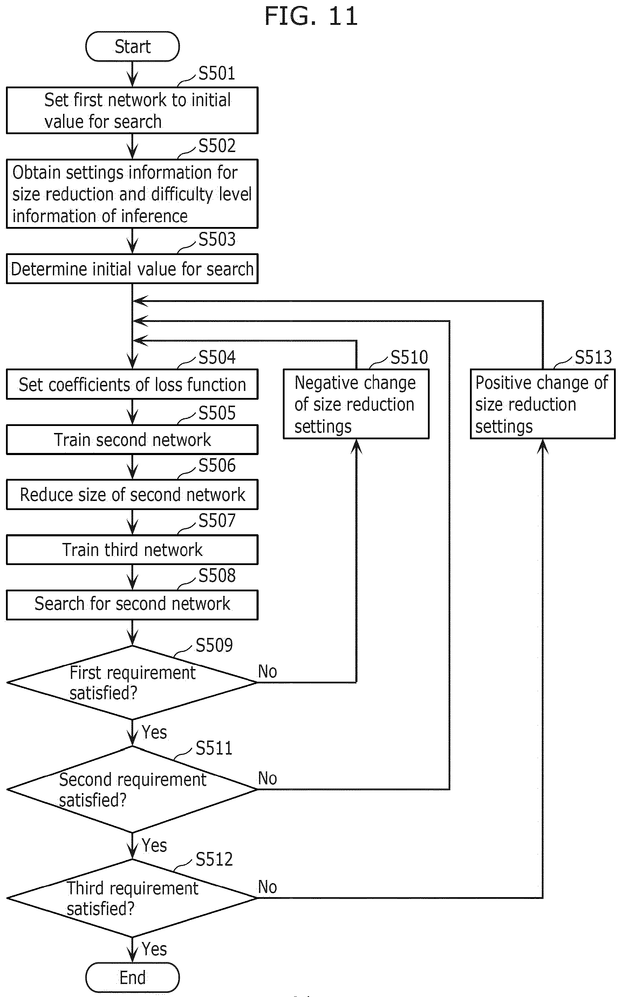

FIG. 11 is a flowchart of a second operation example performed by the information processing system in Embodiment 2.

[FIG. 12]

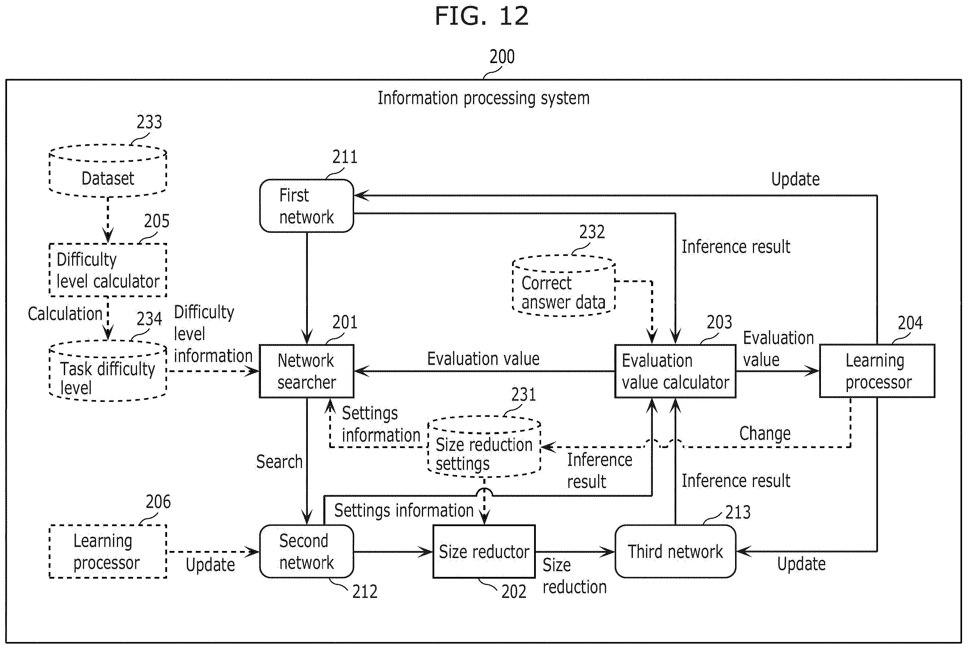

FIG. 12 is a block diagram showing an example of the configuration of an information processing system in Embodiment 3.

[FIG. 13]

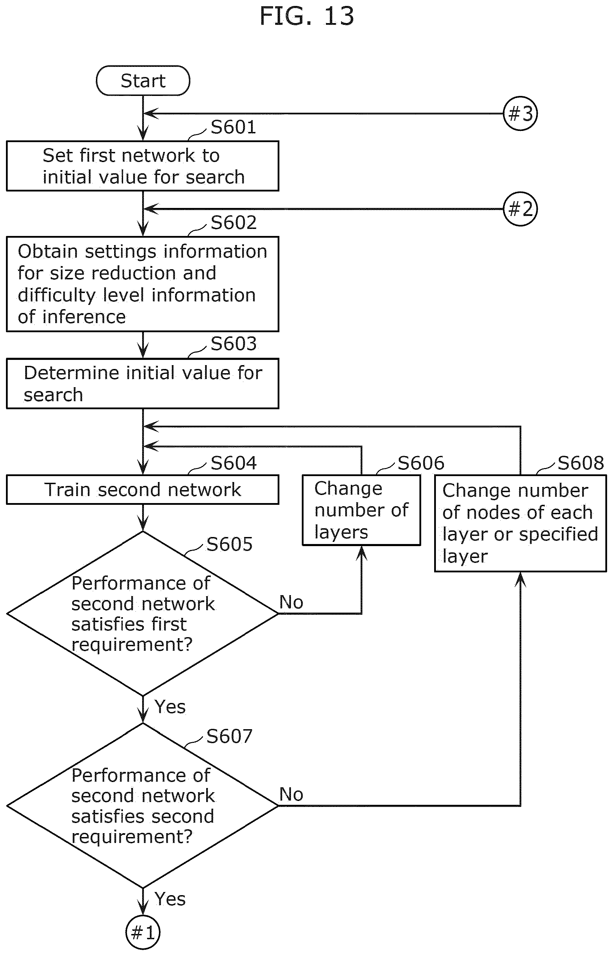

FIG. 13 is a flowchart of a first phase of an operation example performed by the information processing system in Embodiment 3.

[FIG. 14]

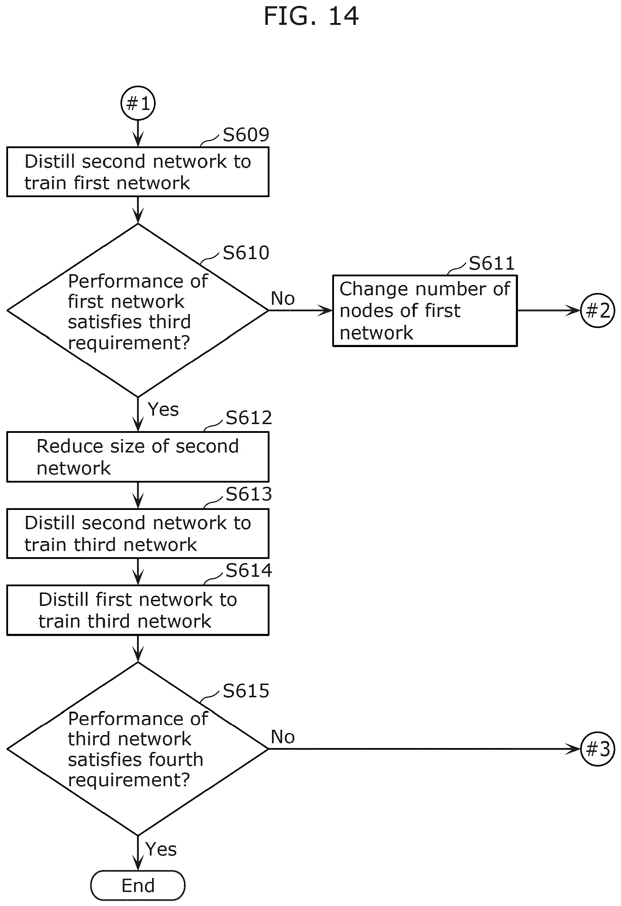

FIG. 14 is a flowchart of a second phase and a third phase of the operation example performed by the information processing system in Embodiment 3.

[FIG. 15]

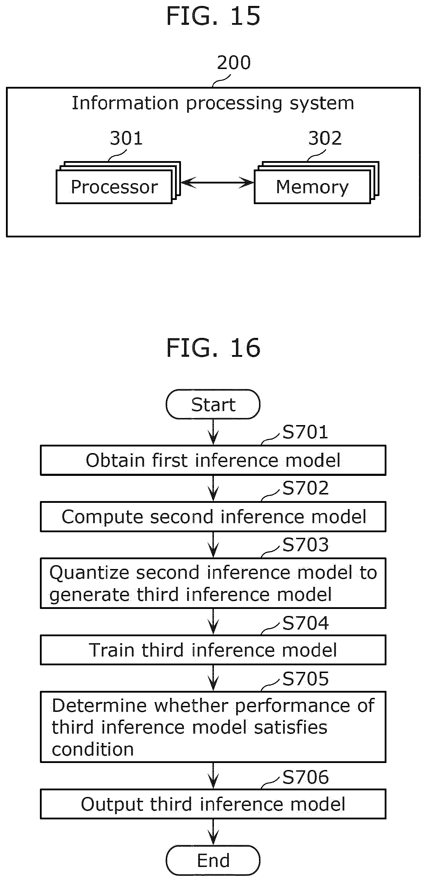

FIG. 15 is a block diagram showing a basic implementation example of the information processing system in the embodiments.

[FIG. 16]

FIG. 16 is a flowchart of a basic operation example performed by the information processing system in the embodiments.

[FIG. 17]

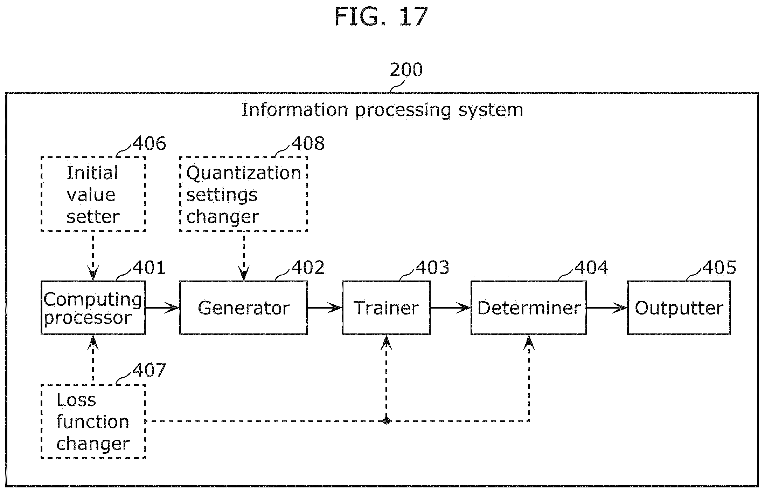

FIG. 17 is a block diagram showing another basic implementation example of the information processing system in the embodiments.

[Description of Embodiments]

(Underlying Knowledge Forming Basis of the Present Disclosure)

Functions of deep learning-based inference are integrated into some of the Internet of things (IoT) devices. Also, from the cost and privacy point of view, inference processing is performed not in an environment such as a cloud or a GPU, but by a processor included in a device in some cases. In these cases, the size of a network (NW) is reduced, using a method such as quantization. Through this, deep learning-based inference processing is performed by a processor having limited computation resources such as computing power and memory capacity.

Here, the network refers to an inference model, such as a neural network model, for performing inference processing.

However, in quantization, for example, a reference network (RefNW) that uses floating-point representation is converted into an integrated environment network (IntNW) that uses fixed-point representation. Such quantization can result in a loss in inference performance. More specifically, accuracy can decrease and disagreement can occur between the inference results of the reference network and the integrated environment network.

NPL 1 proposes a method, relating to a neural network model, of searching for a network architecture. The method proposed in NPL 1 searches for a network architecture having high inference performance and high inference speed. The network architecture corresponds to the number of layers, the number of nodes of each layer, and inter-node connections, and so forth. Stated differently, the method proposed in NPL 1 searches for a network architecture that includes the number of layers, the number of nodes of each layer, inter-node connections, and so forth that achieve high inference performance and high inference speed.

However, the method proposed in NPL 1 fails to take into consideration a loss caused by quantization. For this reason, the use of the method proposed in NPL 1 can result in a loss in the inference performance due to quantization that is performed for reducing the network size.

In view of this, the information processing method according to an aspect of the present disclosure is, for example, an information processing method executed by a computer. This information processing method includes: obtaining a first inference model serving as a reference; computing a second inference model that is larger than the first inference model in model size, based on the first inference model; quantizing the second inference model computed to generate a third inference model; training the third inference model, using machine learning; determining whether a performance of the third inference model trained satisfies a condition; and outputting the third inference model trained, when the performance satisfies the condition.

With this, the second inference model that is larger than the first inference model in model size is quantized. It is assumed that the performance of the second inference model having a large model size is less subjected to a decrease even after being quantized. Stated differently, the third inference model that is generated by quantizing the second inference model that is larger than the first inference model in model size is assumed to be subjected to a relatively small loss caused by quantization. This thus enables to find an inference model that is expected to reduce a loss caused by quantization.

Also, the information processing method further includes for example: obtaining settings information indicating settings for the quantizing of the second inference model; and setting an initial value for the computing of the second inference model, based on the settings information and the first inference model.

With this, the computing of the second inference model is started on the basis of the settings information for quantization and the first inference model. This thus enables to find, at an early stage, the third inference model that is based on quantization and the first inference model.

Also, the information processing method further includes for example: obtaining difficulty level information indicating an inference difficulty level of at least one of the first inference model, the second inference model, or the third inference model; and setting an initial value for the computing of the second inference model, based on the difficulty level information and the first inference model.

With this, the computing of the second inference model is started on the basis of the difficulty level information of inference and the first inference model. This thus enables to find, at an early stage, the third inference model that is based on the inference difficulty level and the first inference model.

Also, for example, the computing of the second inference model is a search for the second inference model performed using a loss function, the loss function is a function whose output value decreases with a decrease in a difference between an inference result of the first inference model and an inference result of the third inference model, and whose output value decreases with an increase in the model size of the second inference model relative to the first inference model, and the search for the second inference model is performed to cause the output value of the loss function to decrease.

This enables to find an inference model that is expected reduce a loss caused by quantization, on the basis of the loss function.

Also, the information processing method further includes for example: obtaining settings information indicating settings for the quantizing of the second inference model; and changing the loss function, based on the settings information.

This enables to find an inference model that is expected reduce a loss caused by quantization, on the basis of the loss function that is based on the settings for quantization.

Also, for example, the loss function is changed to increase the output value of the loss function with an increase in a degree of the quantizing in the settings indicated by the settings information, and the search for the second inference model is performed to cause the output value of the loss function to be less than or equal to a threshold.

With this, although the output value of the loss function increases with an increase in the degree of quantization, the second inference model is searched for to cause the output value of the loss function to be less than or equal to the threshold. Stated differently, even when the loss is large due to a large degree of quantization, the second inference model that satisfies a certain condition for reducing the loss is searched for. This thus enables to find an inference model that is expected to reduce the loss at a constant level.

Also, the information processing method further includes for example: obtaining difficulty level information indicating an inference difficulty level of at least one of the first inference model, the second inference model, or the third inference model; and changing the loss function, based on the difficulty level information.

This enables to find an inference model that is expected reduce a loss caused by quantization, on the basis of the loss function that is based on the inference difficulty level.

Also, for example, the loss function is changed to increase the output value of the loss function with an increase in the inference difficulty level indicated by the difficulty level information, and the search for the second inference model is performed to cause the output value of the loss function to be less than or equal to a threshold.

With this, although the output value of the loss function increases with an increase in the inference difficulty level, the second inference model is searched for to cause the output value of the loss function to be less than or equal to the threshold. Stated differently, even when the loss is large due to a high inference difficulty level, the second inference model that satisfies a certain condition for reducing the loss is searched for. This thus enables to find an inference model that is expected to reduce the loss at a constant level.

Also, the information processing method further includes, for example, changing settings for the quantizing of the second inference model when the performance fails to satisfy the condition.

With this, there is a possibility that the settings for quantization are changed to satisfy the condition for the performance. This thus enables to find an inference model that is expected to satisfy the condition for the performance.

Also, for example, the condition includes accuracy or correctness of an inference of the third inference model with respect to an inference result of the first inference model or reference data, and the changing of the settings includes decreasing a degree of the quantizing when the accuracy or the correctness of the inference of the third inference model is less than or equal to a threshold.

With this, when the accuracy or the correctness of the inference of the third inference model is less than or equal to the threshold, the degree of quantization to be performed on the second inference model is decreased to improve the accuracy or the correctness of the inference of the third inference model. This thus enables to find an inference model that is expected to satisfy the condition for the accuracy and correctness of inference.

Also, for example, the condition includes a speed of inference processing of the third inference model, and the changing of the settings includes increasing a degree of the quantizing when the speed of the inference processing is less than or equal to a threshold.

With this, when the speed of the inference processing of the third inference model is less than or equal to the threshold, the degree of quantization to be performed on the second inference model is increased to increase the speed of the inference processing of the third inference model. This thus enables to find an inference model that is expected to satisfy the condition for the speed of the inference processing.

Also, the information processing method further includes for example: inputting data to the first inference model to obtain an inference result of the first inference model; inputting the data to the second inference model to obtain an inference result of the second inference model; and training the first inference model, based on a difference between the inference result of the first inference model and the inference result of the second inference model.

With this, the first inference model and the third inference model are built on the basis of the same second inference model. This thus reduces the difference between the inference result of the first inference model and the inference result of the third inference model.

Also, the information processing system according to an aspect of the present disclosure includes, for example, at least one processor and at least one memory. Using the at least one memory, the at least one processor: obtains a first inference model serving as a reference; computes a second inference model that is larger than the first inference model in model size, based on the first inference model; quantizes the second inference model computed to generate a third inference model; trains the third inference model, using machine learning; determines whether a performance of the third inference model trained satisfies a condition; and outputs the third inference model trained when the performance satisfies the condition.

With this, the second inference model that is larger than the first inference model in model size is quantized. It is assumed that the performance of the second inference model having a large model size is less subjected to a decrease even after being quantized. Stated differently, the third inference model that is generated by quantizing the second inference model that is larger than the first inference model in model size is assumed to be subjected to a relatively small loss caused by quantization. This thus enables to find an inference model that is expected to reduce a loss caused by quantization.

Further, these general and specific aspects may be implemented using a system, a device, a method, an integrated circuit, a computer program, or a non-transitory computer-readable recording medium such as a CD-ROM, or any combination of systems, devices, methods, integrated circuits, computer programs, or recording media.

Hereinafter, certain exemplary embodiments are described in greater detail with reference to the accompanying Drawings. Each of the exemplary embodiments described below shows a general or specific example. The numerical values, shapes, materials, elements, the arrangement and connection of the elements, steps, the processing order of the steps etc. shown in the following exemplary embodiments are mere examples, and therefore do not limit the scope of the appended Claims and their equivalents. Therefore, among the elements in the following exemplary embodiments, those not recited in any one of the independent claims are described as optional elements.

Also, in the present disclosure, the ordinal numbers, such as first, second, and third, are assigned to some of the elements. These ordinal numbers are assigned to the elements to identify the elements, and thus do not necessarily correspond to the meaningful order. These ordinal numbers may be reordered, removed, or newly assigned as appropriate.

Also, in the present disclosure, inference includes detection, recognition, identification, and so forth. Also, in the present disclosure, computing includes determination processing, search processing, obtainment processing, derivation processing, extraction processing, and so forth.

Also, in the present disclosure, to distill network NW1 to train network NW2 means, for example, to use network NW1 as a teacher network to train network NW2. Also, in the present disclosure, to train a network means, for example, to adjust parameters of the network. To train a network may be read as to perform learning on the network. Also, a network may be read as an inference model.

[Embodiment 1]

FIG. 1 is a conceptual diagram showing a decrease in detection accuracy in a first reference example. More specifically, FIG. 1 shows the difference between the detection result of the reference network and the detection result of an integrated environment network.

The reference network is assumed to be used, for example, in a cloud environment or a GPU environment, and is built using floating-point representation. Meanwhile, the integrated environment network is assumed to be integrated into, for example, an IoT device, and is built using fixed-point representation. Basically, training is first performed in a cloud environment or a GPU environment to build the reference network. In the present invention, the reference network is converted into the integrated environment network.

The integrated environment has limited resources. As such, when the reference network is converted into the integrated environment network, the size of the network is reduced. Such size reduction includes quantization for converting floating-point representation into fixed-point representation. This size reduction results in a decrease in the detection accuracy.

More specifically, as shown in FIG. 1, in the reference network, a dog, a person, and a horse are detected from the image. In the integrated environment network, a dog and a person are detected from the image, but not a horse. Stated differently, the integrated environment network is inferior to the reference network in detection accuracy. In other words, the integrated environment network has an increased number of FalseNegtives (FNs) and FalsePositives (FPs) than the reference network.

FIG. 2 is a conceptual diagram showing a comparison between the reference network and the integrated environment network in the first reference example. The integrated environment network is built by reducing the size of the reference network. Such size reduction results in a decrease in the inference accuracy. Stated differently, the inference accuracy of the integrated environment network is lower than the inference accuracy of the reference network.

This causes a possibility that the integrated environment network fails to achieve a desired performance. Another possibility is that disagreement, for example, occurs between the inference results of the reference network and the integrated environment network, which can result in an increase in the number of steps required to evaluate and verify the integrated environment network.

FIG. 3 is a conceptual diagram showing a comparison between a reference network and an integrated environment network in the present embodiment. In the present embodiment, the integrated environment network is built whose inference accuracy is close to the inference accuracy of the reference network.

This can achieve the desired performance in the integrated environment network. This also reduces, for example, disagreement between the inference results of the reference network and the integrated environment network, thus reducing the number of steps required to evaluate and verify the integrated environment network.

FIG. 4 is a block diagram showing the configuration of an information processing system in a second reference example. More specifically, FIG. 4 shows the configuration of information processing system 100 that is assumed from NPL 1. Information processing system 100 includes network searcher 101, evaluation value calculator 103, and learning processor 104.

Network searcher 101 searches for second network 112 that is expected to have better inference accuracy and inference speed as a result of distilling first network 111 serving as a reference network. This process corresponds to obtaining an evaluation value from evaluation value calculator 103 and searching for second network 112 with which an evaluation value is expected to be better.

First network 111 and second network 112 are inference models, such as neural network models, for performing inference processing. The inference speed of second network 112 is expected to be higher than that of first network 111. For this reason, the size of second network 112 to be searched for is assumed to be smaller than the size of first network 111.

Note that the size of a network corresponds to the number of nodes, the number of layers, the number of parameters, the number of inter-node connections, etc. included in the network. The size of the network increases with an increase in the number of nodes, the number of layers, the number of parameters, the number of inter-node connections, etc. included in the network. Alternatively, the size of the network may correspond to any one of the number of nodes, the number of layers, the number of parameters, and the number of inter-node connections included in the network.

Evaluation value calculator 103 calculates an evaluation value. More specifically, evaluation value calculator 103 obtains, for example, the inference result of first network 111 and the inference result of second network 112, and calculates an output value of the loss function relating to inference accuracy and inference speed as the evaluation value. The output value of the loss function increases with an increase in the difference between the inference result of first network 111 and the inference result of second network 112 and with an increase in the processing latency of second network 112. The evaluation value that corresponds to the output value of the loss function is the smaller the better.

To obtain inference results from first network 111 and second network 112, evaluation value calculator 103 may input the same data to first network 111 and second network 112. Alternatively, such data input may be performed by learning processor 104 or by, for example, an inputter or a network controller not illustrated in the drawings.

Learning processor 104 updates second network 112 to improve the inference accuracy and the inference speed. More specifically, learning processor 104 obtains the evaluation value from evaluation value calculator 103 and updates second network 112 to improve the evaluation value.

In particular, learning processor 104 updates second network 112 to improve the evaluation value, thereby performing update to reduce the difference between the inference result of first network 111 and the inference result of second network 112. Stated differently, learning processor 104 distills first network 111 to train second network 112.

Network searcher 101, evaluation value calculator 103, and learning processor 104 repeat the foregoing processes, thereby enabling the obtainment of second network 112 whose inference accuracy and inference speed are better. The search for second network 112 performed by information processing system 100 is a search automatically performed on the basis of the loss function and is a search for a network architecture. Such search is also referred to as automatic search or neural architecture search (NAS).

FIG. 5 is a flowchart of an operation performed by information processing system 100 in the second reference example. First, network searcher 101 sets first network 111 to the initial value for searching for second network 112 (S101). Stated differently, network searcher 101 sets first network 111 at the start position of searching for second network 112.

Next, learning processor 104 trains second network 112 (S102). More specifically, learning processor 104 trains second network 112 to improve an evaluation value obtained from evaluation value calculator 103. This process corresponds to distilling first network 111 to train second network 112.

Next, network searcher 101 searches for second network 112 with which an evaluation value to be obtained is expected to be better as a result of the training (S103).

When the performance of second network 112 satisfies the requirement (Yes in S104), the processing ends. For example, the processing ends when the inference accuracy and the inference speed of second network 112 satisfy the requirement. Meanwhile, when the performance of second network 112 fails to satisfy the requirement (No in S104), the training of second network 112 (S102) and the search for second network 112 (S103) are repeated.

In the second reference example, the architecture of second network 112 to be searched for in the search for second network 112 is the one whose inference accuracy is close to that of first network 111 and whose inference speed is higher than that of first network 111. Second network 112 has higher inference speed than that of first network 111, and thus is assumed to be smaller in size than first network 111.

However, the second reference example fails to take into consideration the size reduction of the integrated environment network. In particular, the second reference example fails to take into consideration quantization. For this reason, second network 112 may not be applicable to an integrated environment network. Also, the size reduction that includes quantization can result in degradation compared to the reference network.

The present embodiment describes an information processing method and so forth capable of finding an inference model that is expected to reduce the foregoing loss. Note that reducing the loss may be read as compensating for the loss.

FIG. 6 is a block diagram showing an example of the configuration of the information processing system in the present embodiment. More specifically, FIG. 6 shows the configuration of information processing system 200. Information processing system 200 includes network searcher 201, size reductor 202, evaluation value calculator 203, learning processor 204, and so forth.

Network searcher 201 is an information processor that performs information processing. Network searcher 201 sets first network 211 to the initial value for search and searches for second network 212 that is expected to reduce the loss caused by size reduction.

For example, network searcher 201 obtains first network 211 as a reference network from, for example, an external device of information processing system 200. Subsequently, network searcher 201 sets first network 211 at the start position of searching for second network 212. After this, network searcher 201 obtains the evaluation value from evaluation value calculator 203, and searches for second network 212 with which the evaluation value is expected to be better.

The initial value for search to be set may be, for example, the number of nodes, the type of a kernel, etc. Also, network searcher 201 may obtain the settings information indicating the settings for size reduction and difficulty level information indicating the inference difficulty level to determine the initial value for search, on the basis of the settings for size reduction and the inference difficulty level.

Stated differently, network searcher 201 may adjust the initial value for search on the basis of the settings for size reduction and the inference difficulty level. More specifically, network searcher 201 may increase the number of nodes when the settings for size reduction is set at a higher level than the reference. Network searcher 201 may also increase the number of nodes when the inference difficulty level is set at a higher level than the reference. Also, a table may be used for determining the initial value for search on the basis of the settings for size reduction, the inference difficulty level, or a combination of these.

First network 211 and second network 212 are inference models, such as neural network models, for performing inference processing. The network size of second network 212 is larger than the network size of first network 211. With this, it is expected to reduce the loss caused by size reduction.

First network 211 is also a basic network and a reference network. First network 211 uses, for example, floating-point representation. Second network 212 is an intermediate network that is different neither from a reference network nor an integrated environment network. Second network 212 also uses, for example, floating-point representation.

Size reductor 202 is an information processor that performs information processing. Size reductor 202 reduces the size of second network 212, thereby generating third network 213. Size reduction is performed for a plurality of purposes described below.

One of the purposes is to reduce the network execution latency. The execution latency is represented in the unit of milliseconds (ms) or microseconds ($\mu$s).

Another of the purposes is to reduce a required amount of computation. The required amount of computation is represented by the number of times operations (or Ops) are performed.

Another of the purposes is to reduce a required amount of memory of a weight storage memory, an intermediate feature storage memory, and so forth. The required amount of memory is represented in the unit of bit numbers.

Another of the purposes is to reduce a required amount of memory transfer. The required amount of memory transfer mainly represents the amount of memory transfer between a processor of a device that performs inference processing and an external DRAM. The required amount of memory transfer is represented in the unit of bit/second. Note, however, that the memory to which the processor transfer memory is not limited to an external DRAM.

Another of the purposes is to reduce electric power consumption and electric energy consumption. Electric power consumption is represented by watt (W) or milliwatt (mW) and electric energy consumption is represented by watt-hour (Wh). Electric power consumption and electric energy consumption are determined by a combination of elements such as hardware to be implemented that performs inference processing, the required amount of calculation, and the required amount of memory transfer.

Another of the purposes is to reduce the size of a device into which a neural network model, a deep learning model, or a machine learning model is to be integrated. The index of device size relating to the reduction of device size is represented by cubic centimeter ($cm^3$) or cubic millimeter ($mm^3$). The device size is determined by a combination of elements such as the electric power consumption of the device, the amount of heat capacity of the device, the network execution latency required for the device, and the sizes of components of the device.

Note that size reduction may not be intended for all of the foregoing purposes, and thus some of these may be purposes for size reduction.

The size reduction performed for the foregoing purposes basically includes quantization. Quantization may be, for example, quantization for changing floating-point representation to fixed-point representation. Note that quantization is not limited to quantization for changing floating-point representation to fixed-point representation, and in the present invention is considered to be quantization for changing the representation form to a representation form that requires a smaller number of bits.

For example, by quantizing the network, the representation forms of parameters, input data values, intermediate data values, output data values, and so forth of the network are changed to be representation forms that require a smaller number of bits. Not all but some of the representation forms of parameters, input data values, intermediate data values, output data values, and so forth of the network may be changed to be representation forms that require a smaller number of bits.

Size reduction may include the reduction of the network size such as the reduction in the number of layers, the reduction in the number of nodes, the reduction in the number of inter-node connections, and so forth. Also, size reduction may include only quantization. Stated differently, size reduction may be quantization. Alternatively, size reduction that includes no quantization may be used.

Also, for example, size reductor 202 obtains the settings information for size reduction, and reduces the size of second network 212 on the basis of the settings information. The settings information may include the volume of quantization bit numbers (in other words, degree of quantization), the amount of reducing the number of layers, the amount of reducing the number of nodes, the amount of reducing the number of inter-node connections, and so forth. Here, a small number of quantization bits (in other words, degree of quantization is large) corresponds to a high quantization level, and a large number of quantization bits (in other words, degree of quantization is small) corresponds to a low quantization level. The settings information for size reduction may be stored in a memory, etc. as size reduction settings 231.

Third network 213 is an inference model, such as a neural network model, for performing inference processing. The network size of third network 213 is basically larger than the network size of first network 211. However, the present disclosure is not limited to such configuration, and thus the network size of third network 213 may be smaller than the network size of first network 211.

Third network 213 is an integrated environment network. More specifically, third network 213 is a network that is expected to achieve the purposes of size reduction. Third network 213 uses, for example, fixed-point representation.

Evaluation value calculator 203 is an information processor that performs information processing. Evaluation value calculator 203 calculates an evaluation value. More specifically, evaluation value calculator 203 calculates the inference accuracy of third network 213 as an evaluation value.

For example, evaluation value calculator 203 obtains the inference result of first network 211 and the inference result of third network 213 from the same input data. Evaluation value calculator 203 may then calculate the difference between the inference result of first network 211 and the inference result of third network 213 as the evaluation value. Alternatively, evaluation value calculator 203 may calculate the difference between correct answer data 232 stored in, for example, the memory and the inference result of third network 213 as the evaluation value. The evaluation value is the smaller the better.

To obtain inference results from first network 211 and second network 212, evaluation value calculator 203 may input the same data to first network 211 and second network 212. Alternatively, such data input may be performed by learning processor 204 or by, for example, an inputter or a network controller not illustrated in the drawings.

The evaluation value calculated by evaluation value calculator 203 is used, for example, in network searcher 201 and learning processor 204. Evaluation value calculator 203 may calculate the evaluation value used in network searcher 201 and the evaluation value used in learning processor 204 on the basis of different criteria.

More specifically, evaluation value calculator 203 may calculate, for example, the difference between the inference result of first network 211 and the inference result of third network 213 as the evaluation value used in network searcher 201. Evaluation value calculator 203 may then calculate the difference between correct answer data 232 and the inference result of third network 213 as the evaluation value used in learning processor 204.

Learning processor 204 is an information processor that performs information processing. Learning processor 204 updates third network 213 to improve the inference accuracy of third network 213. More specifically, learning processor 204 obtains the evaluation value from evaluation value calculator 203, and updates third network 213 to improve the evaluation value.

Learning processor 204 may update third network 213 to reduce the difference between the inference result of first network 211 and the inference result of third network 213, in accordance with the evaluation value that corresponds to the difference between the inference result of first network 211 and the inference result of third network 213. Stated differently, learning processor 204 may distill first network 211 to train third network 213.

Alternatively, learning processor 204 may perform adversarial learning on third network 213. The adversarial learning may be performed on the basis of a comparison between the inference result of first network 211 and the inference result of third network 213 or may be performed on the basis of a comparison between correct answer data 232 and the inference result of third network 213. Alternatively, learning processor 204 may perform metric learning on third network 213.

Also, learning processor 204 may change size reduction settings 231 in accordance with, for example, the evaluation value. Stated differently, learning processor 204 may change size reduction settings 231 in accordance with, for example, the inference accuracy of third network 213. For example, learning processor 204 may more decrease the degree to which size reduction is performed as the inference accuracy of third network 213 is lower.

Network searcher 201, size reductor 202, evaluation value calculator 203, and learning processor 204 repeat the foregoing processes, thereby enabling the obtainment of third network 213, as an integrated environment network, having a better inference accuracy. The inference speed of third network 213 is high because its size has been reduced. Learning processor 204 or other elements may output the finally obtained third network 213 as an integrated environment network.

Information processing system 200 may also include difficulty level calculator 205. Difficulty level calculator 205 is an information processor that performs information processing. Difficulty level calculator 205 calculates the inference difficulty level on the basis of dataset 233. The difficulty level may be stored, for example, in the memory as task difficulty level 234.

**EP 4 202 803 B1**

For example, difficulty level calculator 205 may calculate the inference difficulty level on the basis of the data amount, type, and so forth of dataset 233 used for inference. Difficulty level calculator 205 may calculate the difficulty level on the basis of not dataset 233 but the type of inference. For example, the difficulty level of detection processing may be higher than the difficulty level of identification processing.

Information processing system 200 may include learning processor 206. Learning processor 206 updates second network 212 to improve the inference accuracy of second network 212. More specifically, learning processor 206 may train second network 212, using correct answer data 232 as teacher data. Alternatively, learning processor 206 may distill first network 211 to train second network 212.

Alternatively, learning processor 206 may perform adversarial learning on second network 212. The adversarial learning may be performed on the basis of a comparison between the inference result of first network 211 and the inference result of second network 212 or may be performed on the basis of a comparison between correct answer data 232 and the inference result of second network 212. Alternatively, learning processor 206 may perform metric learning on second network 212.

FIG. 7 is a flowchart of a first operation example performed by information processing system 200 in the present embodiment.

First, network searcher 201 obtains first network 211 and sets first network 211 to the initial value for searching for second network 212 (S201). Next, network searcher 201 obtains the settings information indicating the settings for size reduction and the difficulty level information indicating the inference difficulty level (S202). Network searcher 201 then determines the initial value for searching for second network 212 on the basis of the settings for size reduction and the inference difficulty level (S203).

For example, network searcher 201 defines first network 211 as second network 212. Subsequently, network searcher 201 adjusts second network 212 on the basis of the settings for size reduction and the inference difficulty level to determine second network 212. Through this, second network 212 for the initial stage of search is determined.

Subsequently, learning processor 206 trains second network 212 (S204). Note that this process may be omitted.

Next, size reductor 202 reduces the size of second network 212 on the basis of the settings for size reduction to generate third network 213 (S205).

Next, learning processor 204 trains third network 213 (S206). More specifically, learning processor 204 trains third network 213 to improve an evaluation value obtained from evaluation value calculator 203. This process may correspond to distilling first network 211 to train third network 213 or may correspond to other trainings.

When the performance of third network 213 satisfies the requirement (Yes in S207), the processing ends. For example, the processing ends when the inference accuracy and the inference speed of third network 213 satisfy the requirement. Meanwhile, when the performance of third network 213 fails to satisfy the requirement (No in S207), network searcher 201 changes the number of nodes of each layer or a specified layer (S208). Then, the processes are repeated from the training of second network 212 (S204).

The foregoing inference accuracy may include accuracy and correctness. Further, a correct answer agreement rate, which is an agreement rate of correct answer data 232 and the inference result of third network 213, may be used as the correctness. Alternatively, a reference agreement rate, which is an agreement rate of the inference result of first network 211 and the inference result of third network 213, may be used as the correctness. Also, the foregoing inference speed may correspond to the processing time taken for inference.

For example, the foregoing requirement may be that the inference accuracy of third network 213 is higher than or equal to the reference or that the inference speed of third network 213 is higher than or equal to the reference. More specifically, the foregoing requirement may be that the correct answer agreement rate is 90% or higher. Alternatively, the foregoing requirement may also be that the reference agreement rate is 98% or higher. The foregoing requirement may also be that the processing time is 20 ms or less. Alternatively, the foregoing requirement may be a combination of these.

Network searcher 201 may determine whether the performance of third network 213 satisfies the requirement, in accordance with the evaluation value obtained from evaluation value calculator 203. Also, network searcher 201 may change the number of nodes of each layer or a specified layer to improve the evaluation value obtained from evaluation value calculator 203.

The evaluation value obtained from evaluation value calculator 203 may indicate, for example, the inference accuracy of third network 213. The inference accuracy of third network 213 may indicate the difference between the inference result of third network 213 and the inference result of first network 211, or may indicate the difference between the inference result of third network 213 and correct answer data 232. When the inference accuracy of third network 213 is poor, network searcher 201 may then increase the number of nodes of each layer or a specified layer.

Thereafter, the training of second network 212 (S204), the size reduction of second network 212 (S205), the training of third network 213 (S206), and the change in the number of nodes (S208) are repeated until the performance of third network 213 satisfies the requirement. Through this, third network 213 whose performance satisfies the requirement is obtained. Learning processor 204 or other elements may output the finally obtained third network 213.

FIG. 8 is a flowchart of a second operation example performed by information processing system 200 in the present embodiment.

First, network searcher 201 obtains first network 211 and sets first network 211 to the initial value for searching for second network 212 (S301). Next, network searcher 201 obtains the settings information indicating the settings for size reduction and the difficulty level information indicating the inference difficulty level (S302). Network searcher 201 then determines the initial value for searching for second network 212 on the basis of the settings for size reduction and the inference difficulty level (S303).

Next, learning processor 206 trains second network 212 as an optional operation (S304). Subsequently, size reductor 202 reduces the size of second network 212 on the basis of the settings for size reduction to generate third network 213 (S305). Learning processor 204 then trains third network 213 (S306). The processes up until here are the same as those of the first operation example in the present embodiment.

Next, when the performance of third network 213 fails to satisfy a first requirement (No in S307), network searcher 201 changes the number of layers (S308). Then, the processes are repeated from the training of second network 212 (S304).

Network searcher 201 may determine whether the performance of third network 213 satisfies the first requirement, in accordance with the evaluation value obtained from evaluation value calculator 203. Network searcher 201 may also change the number of layers to improve the evaluation value obtained from evaluation value calculator 203.

The evaluation value obtained from evaluation value calculator 203 may indicate, for example, the inference accuracy of third network 213. The inference accuracy of third network 213 may indicate the difference between the inference result of third network 213 and the inference result of first network 211, or may indicate the difference between the inference result of third network 213 and correct answer data 232. When the inference accuracy of third network 213 is poor, network searcher 201 may increase the number of layers.

Meanwhile, when the performance of third network 213 satisfies the first requirement and fails to satisfy a second requirement (Yes in S307 and No in S309), network searcher 201 changes the number of nodes of each layer or a specified layer (S310). This process is the same as that of the first operation example in the present embodiment. Subsequently, the processes are repeated from the training of second network 212 (S304).

Thereafter, the training of second network 212 (S304), the size reduction of second network 212 (S305), the training of third network 213 (S306), the change in the number of layers (S308), and the change in the number of nodes (S310) are repeated until the first requirement and the second requirement are satisfied. When the performance of third network 213 satisfies the first requirement and the second requirement (Yes in S307 and Yes in S309), the processing ends. Through this, third network 213 whose performance satisfies the first requirement and the second requirement is obtained.

The second requirement is, for example, a higher requirement than the first requirement. Stated differently, the second requirement is more stringent than the first requirement. It is assumed that the performance is more affected by the change in the number of layers than the change in the number of nodes. In view of this, the number of layers is changed to satisfy the first requirement that is looser, after which the number of nodes is changed to satisfy the second requirement that is more stringent. With this, third network 213 whose performance satisfies the stringent second requirement is assumed to be found at an early stage.

As described above, information processing system 200 in the present embodiment searches for second network 212 that is larger than first network 211. Information processing system 200 then reduces the size of second network 212 to generate third network 213 and trains third network 213.

With this, third network 213 can be found that is expected to reduce a loss caused by quantization included in the size reduction.

Note that information processing system 200 may include some of the elements described in the present embodiment and may perform some of the processes described in the present embodiment. Also, at least some of the elements and processes described in the present embodiment may be combined with at least some of the elements and processes described in another embodiment.

[Embodiment 2]

A configuration example of the present embodiment is the same as the configuration example shown in FIG. 6. Note, however, that the present embodiment uses a loss function to perform automatic search for a network. The loss function is a loss function for finding an intermediate network (i.e., second network 212) and an integrated environment network (i.e., third network 213) that are expected to reduce a loss caused by quantization included in size reduction. With this, it is possible to efficiently find an integrated environment network. More specifically, L(x) shown below is used as the loss function.

$$L(x) = CE(x, \text{TargetNetQuant})$$

$$\cdot \alpha \cdot \log(\text{LAT}(\text{TargetNetQuant}))^{\beta}$$

$$\cdot \gamma \cdot \text{Diff}(\text{RefNet}(x), \text{TargetNetQuant}(x))^{\delta}$$

$$+ \lambda \cdot R\_size(\text{SizeDiff}(\text{RefNet}, \text{TargetNet}))$$

Here, x represents an input to a network. RefNet represents a reference network (i.e., first network 211). TargetNet represents an intermediate network (i.e., second network 212). TargetNetQuant represents an integrated environment network (i.e., third network 213).

CE(x, TargetNetQuant) is a cross entropy term which represents the difference between the inference result of the integrated environment network and correct answer data 232. CE is a cross entropy function. This term has the same properties as those of the normal training.

$\alpha \cdot \log(\text{LAT}(\text{TargetNetQuant}))^{\beta}$ is a latency term and a term relating to the execution speed of the integrated environment network. LAT is a function representing the amount of latency. LAT(TargetNetQuant) represents the amount of latency of the integrated environment network. Also, $\alpha$ and $\beta$ are coefficients for adjusting an output value of the latency term.

$\gamma \cdot \text{Diff}(\text{RefNet}(x), \text{TargetNetQuant}(x))^{\delta}$ is a reference integration equivalent term and is a term representing the difference between the reference network and the integrated environment network. Diff is a function representing the difference. Diff(RefNet(x), TargetNetQuant (x)) represents the difference between the inference result of the reference network and the inference result of the integrated environment network.

An absolute value difference, a square absolute value difference, a Euclidean distance, or a cosine distance, for example, may be used as the foregoing difference. $\gamma$ and $\delta$ are coefficients for adjusting an output value of the reference integration equivalent term.

$\lambda \cdot R\_size(\text{SizeDiff}(\text{RefNet}, \text{TargetNet}))$ is a constraint term of the size difference. SizeDiff is a function representing the size difference. SizeDiff(RefNet, TargetNet) represents the size difference between the reference network and the intermediate network.

The difference in the number of parameters, the difference in the number of channels, or the difference in the number of layers, for example, may be used as the size difference. Alternatively, the difference in the number of parameters that are assigned weights on a layer-by-layer basis, where a smaller weight is assigned to an important layer, for example, may be used as the size difference.

R_size is a size difference evaluation function for evaluating the size difference. R_size(SizeDiff(RefNet, TargetNet)) decreases with an increase in the size difference between the reference network and the intermediate network and increases with a decrease in the size difference between the reference network and the intermediate network.

The size of the intermediate network is set to be larger than the reference network. As such, R_size(SizeDiff(RefNet, TargetNet)) is smaller as the intermediate network is relatively large with respect to the reference network. Also, $\lambda$ is a coefficient for adjusting an output value of the constraint term of the size difference.

FIG. 9 is a graph showing the size difference evaluation function in the present embodiment. An output value (R_size(x)) of the size difference evaluation function decreases with an increase in an input value (x) of the size difference evaluation function. Also, $\varepsilon$ and $\theta$ included in the size difference evaluation function shown in FIG. 9 are coefficients for adjusting the output value of the size difference evaluation function. FIG. 9 shows an example in which $\varepsilon=1$ and $\theta=10$.

Evaluation value calculator 203 performs an operation of the foregoing loss function. Evaluation value calculator 203 then outputs an output value of the loss function as the evaluation value. Network searcher 201 obtains the output value of the loss function from evaluation value calculator 203 as the evaluation value, and searches for second network 212 with which an output value of the loss function is smaller.

Learning processor 204 may also obtain an output value of the loss function from evaluation value calculator 203 as the evaluation value, and train third network 213 to decrease an output value of the loss function. Alternatively, evaluation value calculator 203 may calculate a different evaluation value used in learning processor 204 from the evaluation value used in network searcher 201. Learning processor 204 may then train third network 213 on the basis of such different evaluation value from the output value of the loss function.

Also, evaluation value calculator 203 may set $\gamma$, $\delta$, $\lambda$, $\varepsilon$, and $\theta$ on the basis of the settings for size reduction and the inference difficulty level. For example, evaluation value calculator 203 may adjust these coefficients on the basis of whether the settings for size reduction is positive or negative.

In relation to pruning for reducing the number of nodes, positive size reduction means that the rate of reducing the number of nodes is high, whereas negative size reduction means that the rate of reducing the number of nodes is low. In relation to quantization, positive size reduction means that the number of quantization bits is small and the quantization level is high, whereas negative size reduction means that the number of quantization bits is large and the quantization level is low. Positive size reduction may also mean that the rate of reducing the number of layers is high, whereas negative size reduction may mean that the rate of reducing the number of layers is low.

It is assumed, for example, that positive size reduction results in a decrease in the inference accuracy. In view of this, when size reduction is positive, evaluation value calculator 203 changes $\gamma$, $\delta$, $\lambda$, $\varepsilon$, and $\theta$ of the loss function to increase an output value of the loss function. Then, second network 212 is searched for to cause an output value of the loss function to be less than or equal to the threshold. This can alleviate the decrease in the inference accuracy.

Alternatively, when size reduction is positive, $\gamma$ and $\delta$ are set to be larger to increase a weight of the difference between the inference result of the reference network and the inference result of the integrated environment network. In this case, $\lambda$ and $\theta$ are set to be larger and $\varepsilon$ is set to be smaller to increase a weight of the size difference.

With this, an output value of the loss function decreases with a decrease in the difference between the inference result of the reference network and the inference result of the integrated environment network and with an increase in the size of the intermediate network.

Subsequently, network searcher 201 searches for an intermediate network with which an output value of the loss function is smaller. Stated differently, network searcher 201 searches for an intermediate network to decrease the difference between the inference result of the reference network and the inference result of the integrated environment network and increase the size of the intermediate network. This alleviates the decrease in the inference accuracy. Also, even when the size of the intermediate network is large, positive size reduction alleviates the decrease in the inference speed.

It is assumed that negative size reduction does not result in a significant decrease in the inference accuracy. For this reason, the foregoing settings are performed in the other way around. When size reduction is negative, for example, evaluation value calculator 203 changes $\gamma$, $\delta$, $\lambda$, $\varepsilon$, and $\theta$ of the loss function to decrease an output value of the loss function. Alternatively, in the same case, $\gamma$ and $\delta$ are set to be smaller to decrease a weight of the difference between the inference result of the reference network and the inference result of the integrated environment network. Also in this case, $\lambda$ and $\theta$ are set to be smaller and $\varepsilon$ is set to be larger to decrease a weight of the size difference.

It is assumed that a high inference difficulty level results in a decrease in the inference accuracy. In view of this, when the inference difficulty level is high, evaluation value calculator 203 changes $\gamma$, $\delta$, $\lambda$, $\varepsilon$, and $\theta$ of the loss function to increase an output value of the loss function. Then, second network 212 is searched for to cause an output value of the loss function to be less than or equal to the threshold. This can alleviate the decrease in the inference accuracy.

Alternatively, when the inference difficulty level is high, $\gamma$ and $\delta$ are set to be larger to increase a weight of the difference between the inference result of the reference network and the inference result of the integrated environment network. Also in this case, $\lambda$ and $\theta$ are set to be larger and $\varepsilon$ is set to be smaller to increase a weight of the size difference. This alleviates the decrease in the inference accuracy.

It is assumed that a low inference difficulty level does not result in a significant decrease in the inference accuracy. For this reason, the foregoing settings are performed in the other way around. When the inference difficulty level is low, for example, evaluation value calculator 203 changes $\gamma$, $\delta$, $\lambda$, $\varepsilon$, and $\theta$ of the loss function to decrease an output value of the loss function. Alternatively, in the same case, $\gamma$ and $\delta$ are set to be smaller to decrease a weight of the difference between the inference result of the reference network and the inference result of the integrated environment network. Also in this case, $\lambda$ and $\theta$ are set to be smaller and $\varepsilon$ is set to be larger to decrease a weight of the size difference.

Note that on the basis of the settings for size reduction and the inference difficulty level, evaluation value calculator 203 may adjust at least one coefficient among $\gamma$, $\delta$, $\lambda$, $\varepsilon$, and $\theta$, with the other coefficients remaining as the initial values. For example, evaluation value calculator 203 may adjust $\varepsilon$ among $\varepsilon$ and $\theta$ included in R_size function, and maintain $\theta$. Alternatively, evaluation value calculator 203 may adjust only $\lambda$, $\theta$, and $\varepsilon$, for example, that relate to the size difference, among $\gamma$, $\delta$, $\lambda$, $\varepsilon$, and $\theta$.

FIG. 10 is a flowchart of a first operation example performed by information processing system 200 in the present embodiment.

First, network searcher 201 obtains first network 211 and sets first network 211 to the initial value for searching for second network 212 (S401). Next, network searcher 201 obtains the settings information indicating the settings for size reduction and the difficulty level information indicating the inference difficulty level (S402). Network searcher 201 then determines the initial value for searching for second network 212 on the basis of the settings for size reduction and the inference difficulty level (S403).

The processes up until here are the same as those of the first operation example and the second operation example in Embodiment 1.

Next, evaluation value calculator 203 sets coefficients of the loss function (S404). More specifically, evaluation value calculator 203 may obtain the settings information indicating the settings for size reduction and the difficulty level information indicating the inference difficulty level, and set the coefficients of the loss function on the basis of the settings for size reduction and the inference difficulty level.

Next, learning processor 206 trains second network 212 as an optional operation (S405). Subsequently, size reductor 202 reduces the size of second network 212 on the basis of the settings for size reduction to generate third network 213 (S406). Learning processor 204 then trains third network 213 (S407). These processes are the same as those of the first operation example and the second operation example in Embodiment 1.

Next, network searcher 201 searches for second network 212 with which an evaluation value to be obtained is expected to be better as a result of the training (S408). More specifically, network searcher 201 searches for a new second network 212 with which an output value of the foregoing loss function is expected to be smaller. Stated differently, network searcher 201 adjusts, for example, the number of layers and the number of nodes of second network 212 to decrease an output value of the foregoing loss function.

Note that the processes may be repeated from the training of second network 212 (S405) to the search for second network 212 (S408) before the determination of whether the performance of third network 213 satisfies the requirement (S409).

When the performance of third network 213 satisfies the requirement (Yes in S409), the processing ends. For example, the processing ends when the inference accuracy and the inference speed of third network 213 satisfy the requirement. Meanwhile, when the performance of third network 213 fails to satisfy the requirement (No in S409), the processes are repeated from the training of second network 212 (S405) to the search for second network 212 (S408). Through this, third network 213 whose performance satisfies the requirement is obtained.

The requirement shown in Embodiment 1 may be used as the foregoing requirement. The foregoing requirement may be, for example, that the correct answer agreement rate is 90% or higher, the reference agreement rate is 98% or higher, and the processing time is 20 ms or less. Alternatively, the output value of the loss function may be used as an index of the performance of third network 213, and the foregoing requirement may be that the output value of the loss function is less than or equal to the threshold.

FIG. 11 is a flowchart of a second operation example performed by information processing system 200 in the present embodiment.

First, network searcher 201 obtains first network 211 and sets first network 211 to the initial value for searching for second network 212 (S501). Next, network searcher 201 obtains the settings information indicating the settings for size reduction and the difficulty level information indicating the inference difficulty level (S502). Network searcher 201 then determines the initial value for searching for second network 212 on the basis of the settings for size reduction and the inference difficulty level (S503).

Next, evaluation value calculator 203 sets coefficients of the loss function (S504). Next, learning processor 206 trains second network 212 as an optional operation (S505). Subsequently, size reductor 202 reduces the size of second network 212 on the basis of the settings for size reduction to generate third network 213 (S506). Learning processor 204 then trains third network 213 (S507). Next, network searcher 201 searches for second network 212 (S508).

The processes up until here are the same as those of the first operation example in Embodiment 1. Note that, as with the first operation example, the processes may be repeated from the training of second network 212 (S505) to the search for second network 212 (S508) before the determination of whether the performance of third network 213 satisfies the first requirement (S509).

Next, when the performance of third network 213 fails to satisfy the first requirement (No in S509), learning processor 204 makes negative change in size reduction settings 231 (S510). Stated differently, learning processor 204 changes the size reduction to be applied to second network 212 to negative size reduction. More specifically, learning processor 204 may increase the number of quantization bits or may decrease the rate of reducing the number of layers and the number of nodes.

Then, the processes are repeated from the setting of the coefficients of the loss function (S504). Note that in the setting of the coefficients of the loss function (S504), the coefficients of the loss function are set on the basis of size reduction settings 231 that have been changed.

Also, when the performance of third network 213 satisfies the first requirement and fails to satisfy the second requirement (Yes in S509 and No in S511), the processes are repeated from the setting of the coefficients of the loss function (S504). In this case, size reduction settings 231 are not to be changed. The processes may thus be repeated from the training of second network 212 (S505).

When the performance of third network 213 satisfies the first requirement and the second requirement, and fails to satisfy a third requirement (Yes in S509, Yes in S511, and No in S512), learning processor 204 makes positive change in size reduction settings 231 (S513). Stated differently, learning processor 204 changes the size reduction to be applied to second network 212 to positive size reduction. More specifically, learning processor 204 may decrease the number of quantization bits or increase the rate of reducing the number of layers and the number of nodes.

Then, the processes are repeated from the setting of coefficients of the loss function (S504). Note that in the setting of the coefficients of the loss function (S504), the coefficients of the loss function are set on the basis of size reduction settings 231 that have been changed.

Then, the processes are repeated from the setting of the coefficients of the loss function (S504) to the search for second network 212 (S508) until the performance of third network 213 satisfies the first requirement, the second requirement, and the third requirement. When the performance of third network 213 satisfies the first requirement, the second requirement, and the third requirement (Yes in S509, Yes in S511, and Yes in S512), the processing ends. Through this, third network 213 whose performance satisfies the first requirement, the second requirement, and the third requirement is obtained.

The second requirement is, for example, a higher requirement than the first requirement. Stated differently, the second requirement is more stringent than the first requirement. In view of this, size reduction settings 231 are changed to satisfy the first requirement that is looser, after which second network 212 is searched for to satisfy the second requirement that is more stringent. With this, third network 213 whose performance satisfies the stringent second requirement is assumed to be found at an early stage.

Also, the first requirement and the second requirement may be requirements for the inference accuracy of third network 213, while the third requirement may be a requirement for the inference speed of third network 213.

In this case, second network 212 is first searched for regarding the inference accuracy of third network 213. On the basis of the result of the search performed regarding the inference accuracy, a search is then performed for second network 212 regarding the inference speed of third network 213, together with positive change in size reduction settings 231. With this, third network 213 that satisfies a plurality of requirements for the inference accuracy and the inference speed can be efficiently found.

More specifically, the first requirement may be, for example, that the correct answer agreement rate is 70% or higher and the reference agreement rate is 90% or higher. The second requirement may be that the correct answer agreement rate is 80% or higher and the reference agreement rate is 95% or higher. The third requirement may be that the processing time is 20 ms or less.

Also, in the foregoing operation, the processes are repeated from the setting of the coefficients of the loss function (S504) to the search for second network 212 (S508). However, the processes may be repeated from the determination of the initial value for search (S503) to the search for second network 212 (S508). Alternatively, the processes may be repeated from the training of second network 212 (S505) to the search for second network 212 (S508).

As described above, information processing system 200 in the present embodiment uses the loss function to search for second network 212. Such loss function is a loss function for finding second network 212 and third network 213 that are expected to reduce a loss caused by quantization included in size reduction. With this, it is possible to efficiently find an integrated environment network. Third network 213 may be possibly found.

Note that information processing system 200 may include some of the elements described in the present embodiment and may perform some of the processes described in the present embodiment. Also, at least some of the elements and processes described in the present embodiment may be combined with at least some of the elements and processes described in another embodiment.

[Embodiment 3]

In Embodiment 1 and Embodiment 2, first network 211 is provided, for example, from the third party, and thus the parameters included in first network 211 are fixed without being changed.

The present embodiment is not limited to the above, and allows for a change in the parameters included in first network 211. The present embodiment also performs an operation for causing the inference result of first network 211 and the inference result of third network 213 to be close to each other. With this, it is expected that a similar inference result is obtained in a device regardless of whether such device uses float-point representation or fixed-point representation.

More specifically, information processing system 200 in the present embodiment changes the parameters of first network 211 without fixing the parameters of first network 211, thereby generating third network 213 capable of obtaining an inference result that highly agrees with the inference result of first network 211.

Even more specifically, information processing system 200 distills second network 212 to train first network 211. Information processing system 200 also reduces the size of second network 212, thereby generating third network 213.

Subsequently, information processing system 200 trains first network 211 and third network 213 that have the same parent, that is, second network 212, so that the inference results thereof are close to each other. Any one of distilling learning, adversarial learning, or metric learning may be used for the training of first network 211 and third network 213.

In the present embodiment, first network 211 and third network 213 have the same parent. As such, it is expected that a reference agreement rate improves compared to Embodiment 1 and Embodiment 2.

FIG. 12 is a block diagram showing an example of the configuration of information processing system 200 in the present embodiment. Information processing system 200 in the present embodiment includes the same elements as a plurality of the elements of information processing system 200 in Embodiment 1 and Embodiment 2. Note, in particular, that the inference result of second network 212 is referred to by evaluation value calculator 203 in the present embodiment. Also, learning processor 204 updates first network 211.

The operation performed by information processing system 200 in the present embodiment is divided into three phases: a first phase, a second phase, and a third phase.

In the first phase, second network 212 having a large size is trained. In the second phase, second network 212 is distilled to train first network 211. In the third phase, the size of second network 212 is reduced to generate third network 213, and first network 211 is distilled to train third network 213. In the third phase, second network 212 may be distilled to train third network 213.

More specifically, in the first phase, learning processor 206 trains second network 212. Note that the first phase may be omitted.

In the second phase, evaluation value calculator 203 obtains the inference result of first network 211 and the inference result of second network 212 to calculate an evaluation value indicating the difference between the inference result of first network 211 and the inference result of second network 212.

Subsequently, learning processor 204 trains first network 211 on the basis of the evaluation value indicating the difference between the inference result of first network 211 and the inference result of second network 212. More specifically, learning processor 204 trains first network 211 to reduce the difference between the inference result of first network 211 and the inference result of second network 212.

In the third phase, size reductor 202 reduces the size of second network 212 to generate third network 213. Subsequently, evaluation value calculator 203 obtains the inference result of first network 211 and the inference result of third network 213 to calculate an evaluation value indicating the difference between the inference result of first network 211 and the inference result of third network 213.

Subsequently, learning processor 204 trains third network 213 on the basis of the evaluation value indicating the difference between the inference result of first network 211 and the inference result of third network 213. More specifically, learning processor 204 trains third network 213 to reduce the difference between the inference result of first network 211 and the inference result of third network 213.

In the third phase, evaluation value calculator 203 may obtain the inference result of second network 212 and the inference result of third network 213 to calculate an evaluation value indicating the difference between the inference result of second network 212 and the inference result of third network 213.

Subsequently, learning processor 204 may train third network 213 on the basis of the evaluation value indicating the difference between the inference result of second network 212 and the inference result of third network 213. More specifically, learning processor 204 may train third network 213 to reduce the difference between the inference result of second network 212 and the inference result of third network 213.

Second network 212 has a high representation capability. Information of second network 212 having a high representation capability is reflected in first network 211 and third network 213. As such, first network 211 and third network 213 are expected to achieve a similar inference accuracy.

Note that, instead of learning processors 204 and 206, information processing system 200 may include three learning processors that correspond to the respective three networks. Stated differently, information processing system 200 may include a first network learning processor that trains first network 211, a second network learning processor that trains second network 212, and a third network learning processor that trains third network 213. Information processing system 200 may also include three evaluation value calculators that correspond to these.

FIG. 13 is a flowchart of the first phase of an example of the operation performed by information processing system 200 in the present embodiment.

First, network searcher 201 obtains first network 211 and sets first network 211 to the initial value for searching for second network 212 (S601).

Note that network searcher 201 may generate first network 211, thereby obtaining first network 211. More specifically, network searcher 201 may determine an expected size of first network 211 on the basis of the design requirements, for example, to determine the architecture of first network 211. Network searcher 201 may then generate first network 211 on the basis of the determined architecture.

Next, network searcher 201 obtains the settings information indicating the settings for size reduction and the difficulty level information indicating the inference difficulty level (S602). Network searcher 201 then determines the initial value for searching for second network 212 on the basis of the settings for size reduction and the inference difficulty level (S603). Subsequently, learning processor 206 trains second network 212 (S604). These processes are the same as those of the first operation example in the present embodiment.

Next, when the performance of second network 212 fails to satisfy the first requirement (No in S605), network searcher 201 changes the number of layers (S606). Subsequently, the processes are repeated from the training of second network 212 (S604).

When the performance of second network 212 satisfies the first requirement and fails to satisfy the second requirement (Yes in S605 and No in S607), network searcher 201 changes the number of nodes of each layer or a specified layer (S608). Subsequently, the processes are repeated from the training of second network 212 (S604).

Then, the training of second network 212 (S604), the change in the number of layers (S606), and the change in the number of nodes (S608) are repeated until the performance of second network 212 satisfies the first requirement and the second requirement. Through this, second network 212 whose performance satisfies the first requirement and the second requirement is obtained.

These processes (S605, S606, S607, and S608) correspond to the processes (S307, S308, S309, and S310) of the second operation example in Embodiment 1. Note, however, that the determination about the performance of third network 213 is performed in the processes of the second operation example in Embodiment 1, but a determination about the performance of second network 212 is performed in the processes of the first phase of the present operation example. Then, when the performance of second network 212 satisfies the first requirement and the second requirement (Yes in S605 and Yes in S607), the processing of the first phase ends.

FIG. 14 is a flowchart of the second phase and the third phase of the operation example performed by information processing system 200 in the present embodiment.

In the second phase, learning processor 204 distills second network 212 to train first network 211 (S609).

More specifically, evaluation value calculator 203 obtains the inference result of first network 211 and the inference result of second network 212 to calculate an evaluation value indicating the difference between the inference result of first network 211 and the inference result of second network 212. With reference to the calculated evaluation value, learning processor 204 trains first network 211 to reduce the difference between the inference result of first network 211 and the inference result of second network 212.

After that, when the performance of first network 211 fails to satisfy the third requirement (No in S610), learning processor 204 changes the number of nodes of first network 211 (S611). More specifically, when the inference accuracy of first network 211 is not higher than or equal to the reference, learning processor 204 increases the number of nodes of first network 211. With this, the inference accuracy of first network 211 is expected to be improved. Then, the processes of the first phase are repeated from the obtainment of the settings information for size reduction and the difficulty level information of inference (S602).

When the performance of first network 211 satisfies the third requirement (Yes in S610), size reductor 202 reduces the size of second network 212 on the basis of the settings for size reduction to generate third network 213 (S612).

Subsequently, learning processor 204 distills second network 212 to train third network 213 (S613). Note that this process may be omitted.

More specifically, evaluation value calculator 203 obtains the inference result of second network 212 and the inference result of third network 213 to calculate an evaluation value indicating the difference between the inference result of second network 212 and the inference result of third network 213. With reference to the calculated evaluation value, learning processor 204 trains third network 213 to reduce the difference between the inference result of second network 212 and the inference result of third network 213.

Next, learning processor 204 distills first network 211 to train third network 213 (S614).

More specifically, evaluation value calculator 203 obtains the inference result of first network 211 and the inference result of third network 213 to calculate an evaluation value indicating the difference between the inference result of first network 211 and the inference result of third network 213. With reference to the calculated evaluation value, learning processor 204 trains third network 213 to reduce the difference between the inference result of first network 211 and the inference result of third network 213.

After that, when the performance of third network 213 fails to satisfy a fourth requirement (No in S615), the processes of the first phase are repeated from the beginning (S601). When the performance of third network 213 satisfies the fourth requirement (Yes in S615), the processing ends. Through this, third network 213 whose performance satisfies the fourth requirement is obtained.

Each of the foregoing performances may be the inference accuracy, the inference speed, or a combination of these as with Embodiment 1 and Embodiment 2. Also, the foregoing requirements are requirements for these performances.

As described above, first network 211 and third network 213 in the present embodiment are based on the same parent. In particular, information processing system 200 in the present embodiment distills second network 212 to train first network 211. As such, a reference agreement rate is expected to improve compared to Embodiment 1 and Embodiment 2.

Note that information processing system 200 may include some of the elements described in the present embodiment and may perform some of the processes described in the present embodiment. Also, at least some of the elements and processes described in the present embodiment may be combined with at least some of the elements and processes described in another embodiment.

(Basic Implementation Example and Basic Operation Example)

The following describes a basic implementation example and a basic operation example relating to Embodiment 1, Embodiment 2, and Embodiment 3.

FIG. 15 is a block diagram showing a basic implementation example of information processing system 200 in the foregoing embodiments. Information processing system 200 includes, for example, at least one processor 301 and at least one memory 302.

Processor 301 is an information processing circuit that performs information processing. Processor 301 may serve as network searcher 201, size reductor 202, evaluation value calculator 203, learning processor 204, difficulty level calculator 205, and learning processor 206. Processor 301 may also serve as these units by reading a program from memory 302 and executing the program. Also, processor 301 may control the inference processing performed by first network 211, second network 212, and third network 213.

Memory 302 is a storage device for storing information, and can be also referred to as a recording medium. Memory 302 may store information such as size reduction settings 231, correct answer data 232, dataset 233, and task difficulty level 234. Memory 302 may also store a program used by processor 301 to execute information processing. Memory 302 may also store information of first network 211, second network 212, and third network 213.

Information processing system 200 is, for example, a computer. Information processing system 200 may be a single information processing device or may be configured by a plurality of information processing devices.

FIG. 16 is a flowchart of a basic operation example performed by information processing system 200 in the embodiments. For example, at least one processor 301 shown in FIG. 15 performs the operation shown in FIG. 16, using at least one memory 302. Note that a first inference model, a second inference model, and a third inference model in the following description correspond to first network 211, second network 212, and third network 213, respectively.

First, processor 301 obtains the first inference model serving as a reference (S701). Processor 301 then computes the second inference model that is larger than the first inference model in model size, on the basis of the first inference model (S702). Subsequently, processor 301 quantizes the computed second inference model to generate the third inference model (S703).

Next, processor 301 trains the third inference model, using machine learning (S704). Processor 301 then determines whether the performance of the trained third inference model satisfies a condition (S705). Subsequently, processor 301 outputs the trained third inference model when the performance satisfies the condition (S706).

With this, the second inference model that is larger than the first inference model in model size is quantized. It is assumed that the performance of the second inference model having a large model size is less subjected to a decrease even after being quantized. Stated differently, the third inference model that is generated by quantizing the second inference model that is larger than the first inference model in model size is assumed to be subjected to a relatively small loss caused by quantization. This thus enables to find an inference model that is expected to reduce a loss caused by quantization.

Also, for example, processor 301 may obtain settings information indicating settings for quantization performed on the second inference model. Processor 301 may then set an initial value used for the computing of the second inference model, on the basis of the settings information and the first inference model.

With this, the computing of the second inference model is started on the basis of the settings information for quantization and the first inference model. This thus enables to find, at an early stage, the third inference model that is based on quantization and the first inference model.

Also, for example, processor 301 may obtain difficulty level information indicating an inference difficulty level of at least one of the first inference model, the second inference model, or the third inference model. Processor 301 may then set an initial value for the computing of the second inference model, based on the difficulty level information and the first inference model.

With this, the computing of the second inference model is started on the basis of the difficulty level information of inference and the first inference model. This thus enables to find, at an early stage, the third inference model that is based on the inference difficulty level and the first inference model.

Also, for example, the computing of the second inference model may be a search for the second inference model performed using a loss function. The loss function may be a function whose output value decreases with a decrease in a difference between an inference result of the first inference model and an inference result of the third inference model, and whose output value decreases with an increase in the model size of the second inference model relative to the first inference model. The search for the second inference model may then be performed to cause the output value of the loss function to decrease.

This enables to find an inference model that is expected reduce a loss caused by quantization, on the basis of the loss function.

Also, for example, processor 301 may obtain settings information indicating settings for the quantizing of the second inference model. Processor 301 may then change the loss function, based on the settings information.

This enables to find an inference model that is expected to reduce a loss caused by quantization, on the basis of the loss function that is based on the settings for quantization.

Also, for example, the loss function may be changed to increase the output value of the loss function with an increase in a degree of the quantizing in the settings indicated by the settings information. The search for the second inference model may then be performed to cause the output value of the loss function to be less than or equal to a threshold.

With this, although the output value of the loss function increases with an increase in the degree of quantization, the second inference model is searched for to cause the output value of the loss function to be less than or equal to the threshold. Stated differently, even when the loss is large due to a large degree of quantization, the second inference model is searched for to satisfy a certain condition for reducing the loss. This thus enables to find an inference model that is expected to reduce the loss at a constant level.

Also, for example, processor 301 may obtain difficulty level information indicating an inference difficulty level of at least one of the first inference model, the second inference model, or the third inference model. Processor 301 may then change the loss function, based on the difficulty level information.

This enables to find an inference model that is expected reduce a loss caused by quantization, on the basis of the loss function that is based on the inference difficulty level.

Also, for example, the loss function may be changed to increase the output value of the loss function with an increase in the inference difficulty level indicated by the difficulty level information. The search for the second inference model may then be performed to cause the output value of the loss function to be less than or equal to a threshold.

With this, although the output value of the loss function increases with an increase in the inference difficulty level, the second inference model is searched for to cause the output value of the loss function to be less than or equal to the threshold. Stated differently, even when the loss is large due to a high inference difficulty level, the second inference model is searched for to satisfy a certain condition for reducing the loss. This thus enables to find an inference model that is expected to reduce the loss at a constant level.

Also, for example, processor 301 may change settings for the quantizing of the second inference model when the performance fails to satisfy the condition.

With this, there is a possibility that the settings for quantization are changed to satisfy the condition for the performance. This thus enables to find an inference model that satisfies the condition for the performance.

Also, for example, the condition may include accuracy or correctness of an inference of the third inference model with respect to an inference result of the first inference model or reference data. Processor 301 may then decrease a degree of the quantization when the accuracy or the correctness of the inference of the third inference model is less than or equal to a threshold.

With this, when the accuracy or the correctness of the inference of the third inference model is less than or equal to the threshold, the degree of quantization to be performed on the second inference model is decreased to improve the accuracy or the correctness of the inference of the third inference model. This thus enables to find an inference model that is expected to satisfy the condition for the accuracy and correctness of inference.

Also, for example, the condition may include a speed of inference processing of the third inference model. Processor 301 may then increase a degree of the quantization when the speed of the inference processing is less than or equal to a threshold.

With this, when the speed of the inference processing of the third inference model is less than or equal to the threshold, the degree of quantization to be performed on the second inference model is increased to increase the speed of the inference processing of the third inference model. This thus enables to find an inference model that is expected to satisfy the condition for the speed of the inference processing.

Also, for example, processor 301 may input data to the first inference model to obtain the inference result of the first inference model. Processor 301 may also input the data to the second inference model to obtain the inference result of the second inference model. Processor 301 may then train the first inference model on the basis of the difference between the inference result of the first inference model and the inference result of the second inference model.

With this, the first inference model and the third inference model are built, on the basis of the same second inference model. This thus reduces the difference between the inference result of the first inference model and the inference result of the third inference model.

Also, for example, processor 301 may further perform the processing shown in any one of the foregoing embodiments.

FIG. 17 is a block diagram showing another basic implementation example of information processing system 200 in the foregoing embodiments. Information processing system 200 includes, for example, computing processor 401, generator 402, trainer 403, determiner 404, and outputter 405. Information processing system 200 may further include at least one of initial value setter 406, loss function changer 407, or quantization settings changer 408.

Each of these elements is an information processing circuit that performs information processing. These elements may be implemented as processor 301 shown in FIG. 15.

Computing processor 401 is an element that corresponds to, for example, network searcher 201. Computing processor 401 performs processing that relates to the computing of the second inference model. More specifically, computing processor 401 performs the obtainment of the first inference model (S701) and the computing of the second inference model (S702) shown in FIG. 16.

Generator 402 is an element that corresponds to, for example, size reductor 202. Generator 402 performs processing that relates to the quantization of the second inference model and the generation of the third inference model. More specifically, generator 402 performs the generation of the third inference model (S703) shown in FIG. 16.

Trainer 403 is an element that corresponds to, for example, learning processor 204. Trainer 403 performs processing that relates to the training of the third inference model. More specifically, trainer 403 performs the training of the third inference model (S704) shown in FIG. 16. Trainer 403 may also perform processing that relates to the training of the first inference model and processing that relates to the training of the second inference model. Information processing system 200 may include trainer 403 for each of the first inference model, the second inference model, and the third inference model.

Determiner 404 is an element that corresponds to, for example, evaluation value calculator 203. Determiner 404 performs processing that relates to the determination of whether the performance of the third inference model satisfies the condition. More specifically, determiner 404 performs the determination (S705) shown in FIG. 16.

Outputter 405 is an element that corresponds to, for example, evaluation value calculator 203. Outputter 405 performs processing that relates to the output of the third inference model. More specifically, outputter 405 performs the output of the third inference model (S706) shown in FIG. 16.

Initial value setter 406 is an element that corresponds to, for example, network searcher 201. Initial value setter 406 performs processing that relates to the setting of the initial value for the computing of the second inference model. Loss function changer 407 is an element that corresponds to, for example, evaluation value calculator 203. Loss function changer 407 performs processing that relates to the change of the loss function. Quantization settings changer 408 is an element that corresponds to, for example, learning processor 204. Quantization settings changer 408 performs processing that relates to the change of the settings for quantization.

Conversely, network searcher 201 correspond to, for example, such as computing processor 401 and initial value setter 406. Size reductor 202 corresponds to, for example, generator 402. Evaluation value calculator 203 corresponds to, for example, determiner 404, outputter 405, and loss function changer 407. Learning processor 204 and learning processor 206 correspond to, for example, trainer 403 and quantization settings changer 408.

Note that the configuration shown in FIG. 17 is an example, and thus the configuration of information processing system 200 is not limited to the example shown in FIG. 17. For example, the configuration shown in FIG. 17 may be combined with the configuration shown in any one of the foregoing embodiments.

The aspects of the information processing system have been described above on the basis of the embodiments and so forth, but the aspects of the information processing system are not limited to such embodiments and so forth. Variations that can be conceived by those skilled in the art may be applied to the embodiments and so forth, and a plurality of elements in the embodiments and so forth may be freely combined. For example, processing performed by a specific element in the embodiments and so forth may be performed by another element instead of such specific element. Also, the processing order of a plurality of processes may be changed and a plurality of processes may be performed in parallel.

Also, each of the inference models is, for example, a mathematical model for performing inference processing, and may be any one of a machine learning model, a neural network model, or a deep learning model.

Also, the information processing method that includes the steps performed by the elements of the information processing system may be performed by a device or a system. Stated differently, the information processing method may be performed by the information processing system, or may be performed by another device or system.

For example, the foregoing information processing method may be performed by a computer that includes a processor, a memory, an input and output circuits, and so forth. In so doing, the information processing method may be performed by the computer executing a program for causing the computer to perform the information processing method. Also, the program may be recorded in a non-transitory, computer-readable recording medium.

For example, such program causes the computer to execute the information processing method that includes: obtaining a first inference model serving as a reference; computing a second inference model that is larger than the first inference model in model size, based on the first inference model; quantizing the second inference model computed to generate a third inference model; training the third inference model, using machine learning; determining whether a performance of the third inference model trained satisfies a condition; and outputting the third inference model trained, when the performance satisfies the condition.

Also, a plurality of elements of the information processing system may be configured by a dedicated hardware product or a general-purpose hardware product for executing the foregoing program, etc., or a combination of these. The general-purpose hardware product may be configured by, for example, a memory that stores the program, and a general-purpose processor that reads the program from the memory and executes the program. Here, the memory may be, for example, a semiconductor memory or a hard disk, and the general-purpose processor may be, for example, a CPU.

Also, the dedicated hardware product may be configured by, for example, a memory and a dedicated processor. For example, the dedicated processor may refer to the memory to execute the foregoing information processing method.

Also, the elements of the information processing system may be electric circuits. These electric circuits may collectively form a single electric circuit or may be independent electric circuits. Also, these electric circuits may correspond to the dedicated hardware product, or may correspond to the general-purpose hardware product that executes the foregoing program, etc.

## EP 4 202 803 B1

[Industrial Applicability]

The present disclosure is applicable for use as an information processing system for finding an inference model that is expected to reduce a loss caused by quantization. Example applications of the present disclosure include a machine learning model building system, a neural network model building system, a deep learning model building system, etc.

[Reference Signs List]

| 100, 200 | information processing system |
|---|---|
| 101, 201 | network searcher |
| 103, 203 | evaluation value calculator |
| 104, 204, 206 | learning processor |
| 111, 211 | first network |
| 112, 212 | second network |
| 202 | size reductor |
| 205 | difficulty level calculator |
| 213 | third network |
| 231 | size reduction settings |
| 232 | correct answer data |
| 233 | dataset |
| 234 | task difficulty level |
| 301 | processor |
| 302 | memory |
| 401 | computing processor |
| 402 | generator |
| 403 | trainer |
| 404 | determiner |
| 405 | outputter |
| 406 | initial value setter |
| 407 | loss function changer |
| 408 | quantization settings changer |

## Claims

1. An information processing method executed by a computer, the information processing method comprising:

   obtaining a first inference model serving as a reference (S701); and
   computing a second inference model that is larger than the first inference model in model size, based on the first inference model (S702);
   **characterized in that** the information processing method further comprises:

   quantizing the second inference model computed to generate a third inference model (S703);
   training the third inference model, using machine learning (S704);
   determining whether a performance of the third inference model trained satisfies a condition (S705); and
   outputting the third inference model trained, when the performance satisfies the condition (S706),
   the third inference model is an integrated environment network and is assumed to be integrated into an IoT device, and
   in the quantizing of the second inference model, a representation form is changed to a representation form that requires a smaller number of bits.

2. The information processing method according to claim 1, further comprising:

   obtaining settings information indicating settings for the quantizing of the second inference model (S202, S302, S402, S502, S602); and
   setting an initial value for the computing of the second inference model, based on the settings information and the first inference model (S203, S303, S403, S503, S603).

3. The information processing method according to claim 1, further comprising:

obtaining difficulty level information indicating an inference difficulty level of at least one of the first inference model, the second inference model, or the third inference model (S202, S302, S402, S502, S602); and
setting an initial value for the computing of the second inference model, based on the difficulty level information and the first inference model (S203, S303, S403, S503, S603).

4. The information processing method according to claim 1,

wherein the computing of the second inference model is a search for the second inference model performed using a loss function,
the loss function is a function whose output value decreases with a decrease in a difference between an inference result of the first inference model and an inference result of the third inference model, and whose output value decreases with an increase in the model size of the second inference model relative to the first inference model, and
the search for the second inference model is performed to cause the output value of the loss function to decrease.

5. The information processing method according to claim 4, further comprising:

obtaining settings information indicating settings for the quantizing of the second inference model (S402, S502); and
changing the loss function, based on the settings information (S404, S504).

6. The information processing method according to claim 5,

wherein the loss function is changed to increase the output value of the loss function with an increase in a degree of the quantizing in the settings indicated by the settings information, and
the search for the second inference model is performed to cause the output value of the loss function to be less than or equal to a threshold.

7. The information processing method according to claim 4, further comprising:

obtaining difficulty level information indicating an inference difficulty level of at least one of the first inference model, the second inference model, or the third inference model (S402, S502); and
changing the loss function, based on the difficulty level information (S404, S504).

8. The information processing method according to claim 7,

wherein the loss function is changed to increase the output value of the loss function with an increase in the inference difficulty level indicated by the difficulty level information, and
the search for the second inference model is performed to cause the output value of the loss function to be less than or equal to a threshold.

9. The information processing method according to any one of claims 1 to 8, further comprising:
changing settings for the quantizing of the second inference model when the performance fails to satisfy the condition (S510, S513).

10. The information processing method according to claim 9,

wherein the condition includes accuracy or correctness of an inference of the third inference model with respect to an inference result of the first inference model or reference data, and
the changing of the settings includes decreasing a degree of the quantizing when the accuracy or the correctness of the inference of the third inference model is less than or equal to a threshold.

11. The information processing method according to claim 9,

wherein the condition includes a speed of inference processing of the third inference model, and
the changing of the settings includes increasing a degree of the quantizing when the speed of the inference

23

processing is less than or equal to a threshold.

12. The information processing method according to claim 9, further comprising:

inputting data to the first inference model to obtain an inference result of the first inference model;
inputting the data to the second inference model to obtain an inference result of the second inference model; and
training the first inference model, based on a difference between the inference result of the first inference model and the inference result of the second inference model.

13. An information processing system (200) comprising:

a computing processor that obtains a first inference model serving as a reference, and computes a second inference model that is larger than the first inference model in model size, based on the first inference model (401);
**characterized in that** the information processing system further comprises:

a generator (402) that quantizes the second inference model computed to generate a third inference model;
a trainer (403) that trains the third inference model, using machine learning;
a determiner (404) that determines whether a performance of the third inference model trained satisfies a condition; and
an outputter (405) that outputs the third inference model trained when the performance satisfies the condition,
the third inference model is an integrated environment network and is assumed to be integrated into an IoT device, and
in the quantizing of the second inference model, a representation form is changed to a representation form that requires a smaller number of bits.


## Patentansprüche

1. Informationsverarbeitungsverfahren, das von einem Computer ausgeführt wird, wobei das Informationsverarbeitungsverfahren umfasst:

Erhalten eines ersten Inferenzmodells, das als Referenz dient (S701); und
Berechnen eines zweiten Inferenzmodells, das größer als das erste Inferenzmodell in der Modellgröße ist, basierend auf dem ersten Inferenzmodell (S702);
**dadurch gekennzeichnet, dass** das Informationsverarbeitungsverfahren ferner umfasst:

Quantisieren des berechneten zweiten Inferenzmodells, um ein drittes Inferenzmodell zu erzeugen (S703);
Trainieren des dritten Inferenzmodells unter Verwendung von maschinellem Lernen (S704);
Bestimmen, ob eine Leistung des trainierten dritten Inferenzmodells eine Bedingung erfüllt (S705); und
Ausgeben des trainierten dritten Inferenzmodells, wenn die Leistung die Bedingung erfüllt (S706),
wobei das dritte Inferenzmodell ein integriertes Umgebungsnetzwerk ist und dafür vorgesehen ist, in ein IoT-Gerät integriert zu werden, und
wobei beim Quantisieren des zweiten Inferenzmodells eine Darstellungsform in eine Darstellungsform geändert wird, die eine kleinere Anzahl von Bits erfordert.

2. Informationsverarbeitungsverfahren nach Anspruch 1, ferner umfassend:

Erhalten von Einstellungsinformationen, die Einstellungen für das Quantisieren des zweiten Inferenzmodells angeben (S202, S302, S402, S502, S602); und
Setzen eines Anfangswerts für das Berechnen des zweiten Inferenzmodells, basierend auf den Einstellungsinformationen und dem ersten Inferenzmodell (S203, S303, S403, S503, S603).

3. Informationsverarbeitungsverfahren nach Anspruch 1, ferner umfassend:

Erhalten von Schwierigkeitsgradinformationen, die einen Inferenzschwierigkeitsgrad von mindestens einem von dem ersten Inferenzmodell, dem zweiten Inferenzmodell oder dem dritten Inferenzmodell angeben (S202, S302, S402, S502, S602); und

Setzen eines Anfangswerts für das Berechnen des zweiten Inferenzmodells, basierend auf den Schwierigkeitsgradinformationen und dem ersten Inferenzmodell (S203, S303, S403, S503, S603).

4. Informationsverarbeitungsverfahren nach Anspruch 1,

wobei das Berechnen des zweiten Inferenzmodells eine Suche nach dem zweiten Inferenzmodell ist, die unter Verwendung einer Verlustfunktion durchgeführt wird,
wobei die Verlustfunktion eine Funktion ist, deren Ausgabewert mit einer Abnahme einer Differenz zwischen einem Inferenzergebnis des ersten Inferenzmodells und einem Inferenzergebnis des dritten Inferenzmodells abnimmt und deren Ausgabewert mit einer Zunahme der Modellgröße des zweiten Inferenzmodells relativ zum ersten Inferenzmodell abnimmt, und wobei die Suche nach dem zweiten Inferenzmodell durchgeführt wird, um den Ausgabewert der Verlustfunktion zu verringern.

5. Informationsverarbeitungsverfahren nach Anspruch 4, ferner umfassend:

Erhalten von Einstellungsinformationen, die Einstellungen für das Quantisieren des zweiten Inferenzmodells angeben (S402, S502); und
Ändern der Verlustfunktion, basierend auf den Einstellungsinformationen (S404, S504).

6. Informationsverarbeitungsverfahren nach Anspruch 5,

wobei die Verlustfunktion geändert wird, um den Ausgabewert der Verlustfunktion mit einer Zunahme eines Grades der Quantisierung in den durch die Einstellungsinformationen angegebenen Einstellungen zu erhöhen, und
wobei die Suche nach dem zweiten Inferenzmodell durchgeführt wird, um den Ausgabewert der Verlustfunktion kleiner oder gleich einem Schwellenwert zu machen.

7. Informationsverarbeitungsverfahren nach Anspruch 4, ferner umfassend:

Erhalten von Schwierigkeitsgradinformationen, die einen Inferenzschwierigkeitsgrad von mindestens einem von dem ersten Inferenzmodell, dem zweiten Inferenzmodell oder dem dritten Inferenzmodell angeben (S402, S502); und
Ändern der Verlustfunktion, basierend auf den Schwierigkeitsgradinformationen (S404, S504).

8. Informationsverarbeitungsverfahren nach Anspruch 7,

wobei die Verlustfunktion geändert wird, um den Ausgabewert der Verlustfunktion mit einer Zunahme des durch die Schwierigkeitsgradinformationen angegebenen Inferenzschwierigkeitsgrads zu erhöhen, und
wobei die Suche nach dem zweiten Inferenzmodell durchgeführt wird, um den Ausgabewert der Verlustfunktion kleiner oder gleich einem Schwellenwert zu machen.

9. Informationsverarbeitungsverfahren nach einem der Ansprüche 1 bis 8, ferner umfassend:
Ändern von Einstellungen für das Quantisieren des zweiten Inferenzmodells, wenn die Leistung die Bedingung nicht erfüllt (S510, S513).

10. Informationsverarbeitungsverfahren nach Anspruch 9, wobei die Bedingung eine Genauigkeit oder Korrektheit einer Inferenz des dritten Inferenzmodells in Bezug auf ein Inferenzergebnis des ersten Inferenzmodells oder Referenzdaten umfasst, und
wobei das Ändern der Einstellungen ein Verringern eines Grades der Quantisierung umfasst, wenn die Genauigkeit oder die Korrektheit der Inferenz des dritten Inferenzmodells kleiner oder gleich einem Schwellenwert ist.

11. Informationsverarbeitungsverfahren nach Anspruch 9,
wobei die Bedingung eine Geschwindigkeit einer Inferenzverarbeitung des dritten Inferenzmodells umfasst, und
wobei das Ändern der Einstellungen ein Erhöhen eines Grades der Quantisierung umfasst, wenn die Geschwindigkeit der Inferenzverarbeitung kleiner oder gleich einem Schwellenwert ist.

12. Informationsverarbeitungsverfahren nach Anspruch 9, ferner umfassend:

Eingeben von Daten in das erste Inferenzmodell, um ein Inferenzergebnis des ersten Inferenzmodells zu erhalten;

Eingeben der Daten in das zweite Inferenzmodell, um ein Inferenzergebnis des zweiten Inferenzmodells zu erhalten; und

Trainieren des ersten Inferenzmodells, basierend auf einer Differenz zwischen dem Inferenzergebnis des ersten Inferenzmodells und dem Inferenzergebnis des zweiten Inferenzmodells.

13. Informationsverarbeitungssystem (200), umfassend:

einen Berechnungsprozessor, der ein erstes Inferenzmodell, das als Referenz dient, erhält und ein zweites Inferenzmodell, das größer als das erste Inferenzmodell in der Modellgröße ist, basierend auf dem ersten Inferenzmodell berechnet (401);

**dadurch gekennzeichnet, dass** das Informationsverarbeitungssystem ferner umfasst:

einen Generator (402), der das berechnete zweite Inferenzmodell quantisiert, um ein drittes Inferenzmodell zu erzeugen;

einen Trainer (403), der das dritte Inferenzmodell unter Verwendung von maschinellem Lernen trainiert;

einen Bestimmer (404), der bestimmt, ob eine Leistung des trainierten dritten Inferenzmodells eine Bedingung erfüllt;

und einen Ausgeber (405), der das trainierte dritte Inferenzmodell ausgibt, wenn die Leistung die Bedingung erfüllt,

wobei das dritte Inferenzmodell ein integriertes Umgebungsnetzwerk ist und dafür vorgesehen ist, in ein IoT-Gerät integriert zu werden, und

wobei beim Quantisieren des zweiten Inferenzmodells eine Darstellungsform in eine Darstellungsform geändert wird, die eine kleinere Anzahl von Bits erfordert.

## Revendications

1. Procédé de traitement d'informations exécuté par un ordinateur, le procédé de traitement d'informations comprenant :

l'obtention d'un premier modèle d'inférence servant de référence (S701) ; et

le calcul d'un deuxième modèle d'inférence qui est plus grand que le premier modèle d'inférence en taille de modèle, sur la base du premier modèle d'inférence (S702) ;

**caractérisé en ce que** le procédé de traitement d'informations comprend en outre :

la quantification du deuxième modèle d'inférence calculé pour générer un troisième modèle d'inférence (S703) ;

l'entraînement du troisième modèle d'inférence, en utilisant l'apprentissage automatique (S704) ;

la détermination si une performance du troisième modèle d'inférence entraîné satisfait une condition (S705) ; et

la sortie du troisième modèle d'inférence entraîné, lorsque la performance satisfait la condition (S706),

le troisième modèle d'inférence est un réseau d'environnement intégré et est supposé être intégré dans un dispositif IoT, et dans la quantification du deuxième modèle d'inférence, une forme de représentation est changée en une forme de représentation qui nécessite un plus petit nombre de bits.

2. Procédé de traitement d'informations selon la revendication 1, comprenant en outre :

l'obtention d'informations de paramètres indiquant des paramètres pour la quantification du deuxième modèle d'inférence (S202, S302, S402, S502, S602) ; et

le réglage d'une valeur initiale pour le calcul du deuxième modèle d'inférence, sur la base des informations de paramètres et du premier modèle d'inférence (S203, S303, S403, S503, S603).

3. Procédé de traitement d'informations selon la revendication 1, comprenant en outre :

l'obtention d'informations de niveau de difficulté indiquant un niveau de difficulté d'inférence d'au moins l'un parmi le premier modèle d'inférence, le deuxième modèle d'inférence ou le troisième modèle d'inférence (S202, S302, S402, S502, S602) ; et

le réglage d'une valeur initiale pour le calcul du deuxième modèle d'inférence, sur la base des informations de niveau de difficulté et du premier modèle d'inférence (S203, S303, S403, S503, S603).

4. Procédé de traitement d'informations selon la revendication 1, dans lequel le calcul du deuxième modèle d'inférence est une recherche du deuxième modèle d'inférence effectuée en utilisant une fonction de perte,

la fonction de perte est une fonction dont la valeur de sortie diminue avec une diminution d'une différence entre un résultat d'inférence du premier modèle d'inférence et un résultat d'inférence du troisième modèle d'inférence, et dont la valeur de sortie diminue avec une augmentation de la taille de modèle du deuxième modèle d'inférence par rapport au premier modèle d'inférence, et
la recherche du deuxième modèle d'inférence est effectuée pour faire diminuer la valeur de sortie de la fonction de perte.

5. Procédé de traitement d'informations selon la revendication 4, comprenant en outre :

l'obtention d'informations de paramètres indiquant des paramètres pour la quantification du deuxième modèle d'inférence (S402, S502) ; et
la modification de la fonction de perte, sur la base des informations de paramètres (S404, S504).

6. Procédé de traitement d'informations selon la revendication 5, dans lequel la fonction de perte est modifiée pour augmenter la valeur de sortie de la fonction de perte avec une augmentation d'un degré de la quantification dans les paramètres indiqués par les informations de paramètres, et
la recherche du deuxième modèle d'inférence est effectuée pour faire en sorte que la valeur de sortie de la fonction de perte soit inférieure ou égale à un seuil.

7. Procédé de traitement d'informations selon la revendication 4, comprenant en outre :

l'obtention d'informations de niveau de difficulté indiquant un niveau de difficulté d'inférence d'au moins l'un parmi le premier modèle d'inférence, le deuxième modèle d'inférence ou le troisième modèle d'inférence (S402, S502) ; et
la modification de la fonction de perte, sur la base des informations de niveau de difficulté (S404, S504).

8. Procédé de traitement d'informations selon la revendication 7, dans lequel la fonction de perte est modifiée pour augmenter la valeur de sortie de la fonction de perte avec une augmentation du niveau de difficulté d'inférence indiqué par les informations de niveau de difficulté, et
la recherche du deuxième modèle d'inférence est effectuée pour faire en sorte que la valeur de sortie de la fonction de perte soit inférieure ou égale à un seuil.

9. Procédé de traitement d'informations selon l'une quelconque des revendications 1 à 8, comprenant en outre :
la modification de paramètres pour la quantification du deuxième modèle d'inférence lorsque la performance ne satisfait pas la condition (S510, S513).

10. Procédé de traitement d'informations selon la revendication 9, dans lequel la condition inclut une exactitude ou une justesse d'une

inférence du troisième modèle d'inférence par rapport à un résultat d'inférence du premier modèle d'inférence ou à des données de référence, et
la modification des paramètres inclut la diminution d'un degré de la quantification lorsque l'exactitude ou la justesse de l'inférence du troisième modèle d'inférence est inférieure ou égale à un seuil.

11. Procédé de traitement d'informations selon la revendication 9, dans lequel la condition inclut une vitesse de traitement d'inférence du troisième modèle d'inférence, et
la modification des paramètres inclut l'augmentation d'un degré de la quantification lorsque la vitesse du traitement d'inférence est inférieure ou égale à un seuil.

12. Procédé de traitement d'informations selon la revendication 9, comprenant en outre :

l'entrée de données dans le premier modèle d'inférence pour obtenir un résultat d'inférence du premier modèle d'inférence ;

l'entrée des données dans le deuxième modèle d'inférence pour obtenir un résultat d'inférence du deuxième modèle d'inférence ; et

l'entraînement du premier modèle d'inférence, sur la base d'une différence entre le résultat d'inférence du premier modèle d'inférence et le résultat d'inférence du deuxième modèle d'inférence.

13. Système de traitement d'informations (200) comprenant :

un processeur de calcul qui obtient un premier modèle d'inférence servant de référence, et calcule un deuxième modèle d'inférence qui est plus grand que le premier modèle d'inférence en taille de modèle, sur la base du premier modèle d'inférence (401) ;

**caractérisé en ce que** le système de traitement d'informations comprend en outre :

un générateur (402) qui quantifie le deuxième modèle d'inférence calculé pour générer un troisième modèle d'inférence ;

un entraîneur (403) qui entraîne le troisième modèle d'inférence, en utilisant l'apprentissage automatique ;

un déterminateur (404) qui détermine si une performance du troisième modèle d'inférence entraîné satisfait une condition ; et un dispositif de sortie (405) qui sort le troisième modèle d'inférence entraîné lorsque la performance satisfait la condition,

le troisième modèle d'inférence est un réseau d'environnement intégré et est supposé être intégré dans un dispositif IoT, et dans la quantification du deuxième modèle d'inférence, une forme de représentation est changée en une forme de représentation qui nécessite un plus petit nombre de bits.

# FIG. 1

Detection result of reference network

Convert network for integrated environment

Detection result of integrated environment network

person

horse

dog

person

dog

Detection accuracy decreases

EP 4 202 803 B1

# FIG. 2

Reference network     Integrated environment network

Inference accuracy decreases

# FIG. 3

Reference network     Integrated environment network

Inference accuracies are close to each other

# FIG. 4

100

**Information processing system**

# FIG. 5

## FIG. 6

200

Information processing system

233 Dataset

205 Difficulty level calculator

Calculation

234 Task difficulty level

Difficulty level information

211 First network

232 Correct answer data

Inference result

201 Network searcher

Evaluation value

203 Evaluation value calculator

Evaluation value

204 Learning processor

Settings information

231 Size reduction settings

Change

Search

Settings information

Inference result

206 Learning processor

Update

212 Second network

Size reductor 202

Size reduction

213 Third network

Update

EP 4 202 803 B1

FIG. 7

```
            ┌──────────┐
            │  Start   │
            └──────────┘
                 │      ╱S201
                 ▼
   ┌────────────────────────────┐
   │ Set first network to initial│
   │ value for search            │
   └────────────────────────────┘
                 │      ╱S202
                 ▼
   ┌────────────────────────────┐
   │ Obtain settings information │
   │ for size reduction and      │
   │ difficulty level information of│
   │ inference                   │
   └────────────────────────────┘
                 │      ╱S203
                 ▼
   ┌────────────────────────────┐
   │ Determine initial value for │
   │ search                      │
   └────────────────────────────┘
                 │
                 ▼          ╱S204                      ╱S208
   ┌────────────────────────────┐      ┌────────────────────────────┐
   │   Train second network     │      │ Change number of nodes of  │
   └────────────────────────────┘      │ each layer or specified layer│
                 │      ╱S205           └────────────────────────────┘
                 ▼
   ┌────────────────────────────┐
   │ Reduce size of second      │
   │ network                    │
   └────────────────────────────┘
                 │      ╱S206
                 ▼
   ┌────────────────────────────┐
   │   Train third network      │
   └────────────────────────────┘
                 │      ╱S207
                 ▼
            ╱◇╲
      ╱Requirement╲    No
      ╲satisfied? ╱ ─────────────►
            ╲◇╱
                 │Yes
                 ▼
            ┌──────────┐
            │   End    │
            └──────────┘
```

# FIG. 8

Start

S301
Set first network to initial value for search

S302
Obtain settings information for size reduction and difficulty level information of inference

S303
Determine initial value for search

S304
Train second network

S305
Reduce size of second network

S306
Train third network

S307
First requirement satisfied?   No

S308
Change number of layers

S310
Change number of nodes of each layer or specified layer

Yes

S309
Second requirement satisfied?   No

Yes

End

# FIG. 9

Size difference evaluation function

$$R\_size(x) = \frac{\theta}{x + \varepsilon} = \frac{10}{x + 1}$$

# FIG. 10

```
            ┌─────────┐
            │  Start  │
            └─────────┘
                 │
                 ▼           S401
    ┌────────────────────────────┐
    │ Set first network to       │
    │ initial value for search   │
    └────────────────────────────┘
                 │
                 ▼           S402
    ┌────────────────────────────┐
    │ Obtain settings information │
    │ for size reduction and      │
    │ difficulty level information │
    │ of inference                │
    └────────────────────────────┘
                 │
                 ▼           S403
    ┌────────────────────────────┐
    │ Determine initial value for │
    │ search                      │
    └────────────────────────────┘
                 │
                 ▼           S404
    ┌────────────────────────────┐
    │ Set coefficients of loss    │
    │ function                    │
    └────────────────────────────┘
                 │
                 ▼           S405
    ┌────────────────────────────┐
    │ Train second network        │
    └────────────────────────────┘
                 │
                 ▼           S406
    ┌────────────────────────────┐
    │ Reduce size of second       │
    │ network                     │
    └────────────────────────────┘
                 │
                 ▼           S407
    ┌────────────────────────────┐
    │ Train third network         │
    └────────────────────────────┘
                 │
                 ▼           S408
    ┌────────────────────────────┐
    │ Search for second network   │
    └────────────────────────────┘
                 │
                 ▼           S409
          ◇───────────────◇   No
          │  Requirement   │────────►
          │  satisfied?    │
          ◇───────────────◇
                 │ Yes
                 ▼
            ┌─────────┐
            │   End   │
            └─────────┘
```

# FIG. 11

```
                        ( Start )
                            │
                            ▼       S501
              ┌──────────────────────────────┐
              │  Set first network to initial │
              │        value for search        │
              └──────────────────────────────┘
                            │
                            ▼       S502
              ┌──────────────────────────────┐
              │  Obtain settings information for│
              │ size reduction and difficulty level│
              │     information of inference    │
              └──────────────────────────────┘
                            │
                            ▼       S503
              ┌──────────────────────────────┐
              │  Determine initial value for search │
              └──────────────────────────────┘
```

Flowchart (FIG. 11):

- Start
- S501 Set first network to initial value for search
- S502 Obtain settings information for size reduction and difficulty level information of inference
- S503 Determine initial value for search
- S504 Set coefficients of loss function
- S505 Train second network
- S506 Reduce size of second network
- S507 Train third network
- S508 Search for second network
- S509 First requirement satisfied? — No → S510 Negative change of size reduction settings
- Yes
- S511 Second requirement satisfied? — No → S513 Positive change of size reduction settings
- Yes
- S512 Third requirement satisfied? — No → (loop back)
- Yes
- End

# FIG. 12

200

Information processing system

233 Dataset

205 Difficulty level calculator

Calculation

234 Task difficulty level

Difficulty level information

211 First network

232 Correct answer data

Inference result

201 Network searcher

Evaluation value

203 Evaluation value calculator

Evaluation value

204 Learning processor

Update

Settings information

231 Size reduction settings

Change

Search

Inference result

Inference result

206 Learning processor

Update

212 Second network

Settings information

202 Size reductor

Size reduction

213 Third network

Update

EP 4 202 803 B1

## FIG. 13

```
            ( Start )
                │
                ▼◄──────────────────────────────────── (#3)
         ┌──────────────┐  S601
         │ Set first network to │
         │ initial value for search │
         └──────────────┘
                │
                ▼◄──────────────────────────────────── (#2)
         ┌──────────────┐  S602
         │ Obtain settings information │
         │ for size reduction and │
         │ difficulty level information │
         │ of inference │
         └──────────────┘
                │
                ▼  S603
         ┌──────────────┐
         │ Determine initial value for │
         │ search │
         └──────────────┘
                │
                ▼◄──────────────────────────────┐◄────────┐
         ┌──────────────┐  S604    ┌─────────┐S606   ┌──────────┐S608
         │ Train second network │    │ Change │      │ Change number │
         └──────────────┘    │ number of │      │ of nodes of each │
                │             │ layers │      │ layer or specified │
                ▼  S605       └─────────┘      │ layer │
            ◇ Performance of          ▲        └──────────┘
            second network ──No───────┘             ▲
            satisfies first                          │
            requirement? ◇                           │
                │ Yes                                 │
                ▼  S607                               │
            ◇ Performance of                          │
            second network ──No─────────────────────┘
            satisfies second
            requirement? ◇
                │ Yes
                ▼
              (#1)
```

## FIG. 14

(#1)

Distill second network to train first network — S609

Performance of first network satisfies third requirement? — S610

No → Change number of nodes of first network — S611 → (#2)

Yes

Reduce size of second network — S612

Distill second network to train third network — S613

Distill first network to train third network — S614

Performance of third network satisfies fourth requirement? — S615

No → (#3)

Yes

End

# FIG. 15

200

```
Information processing system

    301              302
  ┌──────────┐     ┌──────────┐
  │ Processor│◄───►│  Memory  │
  └──────────┘     └──────────┘
```

# FIG. 16

```
        ┌─────────┐
        │  Start  │
        └─────────┘
             │
             ▼  S701
┌───────────────────────────────┐
│   Obtain first inference model │
└───────────────────────────────┘
             │
             ▼  S702
┌───────────────────────────────┐
│ Compute second inference model │
└───────────────────────────────┘
             │
             ▼  S703
┌───────────────────────────────┐
│ Quantize second inference model to │
│ generate third inference model │
└───────────────────────────────┘
             │
             ▼  S704
┌───────────────────────────────┐
│   Train third inference model  │
└───────────────────────────────┘
             │
             ▼  S705
┌───────────────────────────────┐
│ Determine whether performance of │
│ third inference model satisfies │
│ condition                      │
└───────────────────────────────┘
             │
             ▼  S706
┌───────────────────────────────┐
│  Output third inference model  │
└───────────────────────────────┘
             │
             ▼
        ┌─────────┐
        │   End   │
        └─────────┘
```

# FIG. 17

EP 4 202 803 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YU LIU et al.** Search to Distill: Pearls are Everywhere but not the Eyes. *Computer Vision and Pattern Recognition (CVPR)*, 2020

- Revisiting Knowledge Distillation via Label Smoothing Regularization. **YUAN LI et al.** 2020 IEEE/CVF CONFERENCE ON COMPUTER VISION AND PATTERN RECOGNITION (CVPR). IEEE, 13 June 2020, 3902-3910